# EUROPÄISCHE PATENTANMELDUNG

(11) **EP 1 970 414 A2**
(43) Veröffentlichungstag der Anmeldung: **17.09.2008**
(21) Anmeldenummer: 08002980.4
(22) Anmeldetag: 18.02.2008
(51) Int. Cl.: C09C 1/00

(54) **Übergangsmetallhaltige Effektpigmente**

(30) Priorität: 05.03.2007 DE 102007010986
(71) Anmelder: Merck Patent GmbH, 64293 Darmstadt (DE)
(72) Erfinder: Handrosch, Carsten, Dr., 64367 Mühltal (DE); Pflücker, Frank, Dr., 64297 Darmstadt (DE)

(57) **Zusammenfassung**

Die vorliegende Erfindung betrifft Übergangsmetalloxid- bzw. Übergangsmetallhydroxyoxid- bzw. Übergangsmetallhydroxid-haltige Effektpigmente auf der Basis von unbeschichteten oder mit ein oder mehreren Metalloxiden beschichteten plättchenförmigen Substraten sowie deren Verwendung, u.a. in Farben, Lacken, Druckfarben, Kunststoffen und insbesondere in kosmetischen Formulierungen.

## Beschreibung

Die vorliegende Erfindung betrifft Übergangsmetalloxid- bzw. Übergangsmetallhydroxyoxid- bzw. Übergangsmetallhydroxid-haltige Effektpigmente auf der Basis von unbeschichteten oder beschichteten plättchenförmigen Substraten sowie deren Verwendung, u.a. in Farben, Lacken, Druckfarben, Kunststoffen und insbesondere in kosmetischen Formulierungen.

Pigmente enthaltend eine Schicht mit einem Oxid/Hydroxid einer Übergangsmetallverbindung, wie z. B. Fe₂O₃, werden als Glanz- oder Effektpigmente in vielen Bereichen der Technik, insbesondere in der dekorativen Beschichtung, in Kunststoffen, Farben, Lacken, Druckfarben sowie in kosmetischen Formulierungen, eingesetzt.

Anwendungsmedien enthalten zur Verbesserung der Eigenschaften in der Regel eine Reihe von Zusatzstoffen, wie z. B. Weichmacher, Füllstoffe, Stabilisatoren, Alterungsschutzmittel, Gleit- und Trennmittel, Antistatika und Farbmittel. Dabei wird häufig insbesondere zwischen den Effektpigmenten einerseits und Zusatzstoffen im Anwendungsmedium andererseits eine unerwünschte Wechselwirkung beobachtet, die vermutlich darin besteht, dass Übergangsmetallkationen mit den Zusatzstoffen auf organischer Basis reagieren. So beobachtet man häufig in Kunststoffen, dass die Stabilisator- und/oder Alterungsmittelmoleküle zu der Oberfläche der Pigmentteilchen diffundieren und dort zu einer Vergilbungsreaktion führen, die vielfach auch im Dunkeln abläuft, insbesondere wenn die Kunststoffe phenolische Komponenten als Antioxidantien, Thermostabilisatoren oder UV-Stabilisatoren enthalten.

Kunststoffe mit phenolischen Bestandteilen zeigen bereits ab einer Pigmentkonzentration von 0,01 Gew.% schon eine Vergilbung. Insbesondere wenn sterisch leicht zugängliche Phenolverbindungen im Kunststoff enthalten sind, kann sich die Vergilbungsreaktion schon bei der Verarbeitung zeigen. Bei sterisch schwer zugänglichen Verbindungen dagegen, tritt die Vergilbung manchmal erst 18 Monate nach der Verarbeitung auf. In der Regel ist die Vergilbungsreaktion bei einer Verarbeitung von 80 °C und einer Pigmentkonzentration von z. B. 0,1 Gew.% innerhalb von 2 h mit dem Auge sichtbar. Die Vergilbungsreaktion führt insbesondere bei Pigmenten mit hellerem Farbton zu unschönen Effekten und beeinträchtigt erheblich den ästhetischen Eindruck des Kunststoffsystems. Bei sehr geringer Konzentrierung des Pigmentes tritt die Vergilbung aber auch bei dunkleren Farbtönen auf. Ursache für die Vergilbungsreaktion ist häufig die Photoaktivität der Übergangsmetallschicht bestehend z.B. aus TiO₂, Fe(OH)₃, FeOOH, Fe₂O₃, Fe₃O₄, CrO₃, ZnO bzw. deren Mischoxide, welche die photolytische Zersetzung der organischen Bestandteile im Kunststoff oder Lack oftmals stark beschleunigt.

Aus der WO 2006/018196 sind speziell nachbeschichtete Interferenzpigmente auf der Basis von beschichteten Glasplättchen bekannt, die eine deutlich geringere Photoaktivität beispielsweise im Vergleich zu TiO₂ beschichteten Glimmerpigmenten aufweisen. Die aus dem Stand der Technik bekannten Pigmente verlangsamen auch deutlich den Abbau von Dihydroxyaceton (DHA) in kosmetischen Selbstbräunungsformulierungen. Allerdings handelt es sich bei den aus dem Stand der Technik bekannten Pigmenten um hochtransparente Interferenzpigmente auf der Basis von Glasplättchen mit einer TiO₂-Beschichtung, also Pigmenten ohne eigene Absorptionsfarbe ("Körperfarbe"). In der Kosmetik ist es aber von Vorteil auch Effektpigmente zur Verfügung zu haben, die eine attraktive beige bis rotbraune Absorptionsfarbe Eisen-haltiger Effektpigmente mit DHA-Stabilität kombinieren. Kosmetische Formulierungen mit Effektpigmenten enthaltend eine Eisenoxid- bzw. -hydroxid-Schicht sind in der Regel nur sehr begrenzt chemisch stabil aufgrund der chemischen Wechselwirkung der Pigmentoberfläche mit den kosmetischen Wirkstoffen, wodurch neben der Zersetzung der kosmetischen Wirksubstanz auch die Lagerstabilität der Formulierung deutlich minimiert wird.

Aufgabe der vorliegenden Erfindung ist es daher Effektpigmente mit einer Übergangsmetalloxid- bzw. -hydroxyoxid-Schicht, insbesondere mit einer Eisenoxid- bzw. Eisenhydroxyoxid-haltigen Schicht zu finden, die photochemisch bzw. thermochemisch weitgehend auf der Oberfläche inaktiv sind und somit keine bzw. nur eine geringe Neigung zeigen mit den organischen Substanzen in den Formulierungen Komplexe zu bilden und aufgrund ihrer attraktiven beigen bis rotbraunen Absorptionsfarbe als "skin-corrector"-Pigmente in den kosmetischen Formulierungen eingesetzt werden können.

Überraschenderweise wurde nun gefunden, dass Effektpigmente auf der Basis von plättchenförmigen Substraten enthaltend ein Oxid/Hydroxid eines Übergangsmetalls stabilisiert werden können, wenn sie als äußere Schicht eine SiO₂- und/oder Al₂O₃-Schicht aufweisen. Durch die Verkapselung der Übergangsmetalloxid-/hydroxid-Schicht mittels SiO₂ und/oder Al₂O₃, bzw. deren Hydraten SiOₓ(OH)_{y} / AIOOH wird der direkte Kontakt zwischen chemisch labilen organischen Substanzen in den Anwendungsmedien und der chemisch reaktiven Übergangsmetalloxid/-hydroxid-Oberfläche ganz bzw. weitgehend unterbunden.

Derartige Effektpigmente können beispielsweise aufgrund ihrer Körperfarbe in kosmetischen Formulierungen, wie z. B. Tagescremes, Foundations oder Selbstbräunungscremes zusammen mit organischen Substanzen, wie z. B. Dihydoxyaceton, kosmetischen Wirkstoffen, wie z. B. UV-Filter, welche bei Anwesenheit von Übergangsmetalloxiden, wie z. B. Eisenoxiden oder -hydroxiden, normalerweise nur sehr begrenzt chemisch stabil sind, kombiniert werden. Die Lagerstabilität in Hinsicht auf Zerstörung der kosmetischen Wirksubstanz wird dabei durch die Verwendung der erfindungsgemäßen Pigmente deutlich erhöht. Weiterhin wird bei der Pigmentierung mit den erfindungsgemäßen Effektpigmenten eine deutlich langsame Vergilbung im Lack und Kunststoff beobachtet.

Gegenstand der vorliegenden Erfindung sind daher Effektpigmente auf der Basis unbeschichteter oder beschichteter plättchenförmiger Substrate, die sich dadurch auszeichnen, dass sie auf der Pigmentoberfläche als finale Schicht ein Schichtpaket aus
(A) einer Schicht aus Eisenoxid und/oder Eisenoxohydrat und
(B) einer Schicht aus SiO₂ und/oder Al₂O₃ bzw. deren Hydraten,
oder ein Schichtpaket aus
(A) einer Schicht enthaltend ein Mischoxid, Hydroxid, Oxohydrat oder Doppelhydroxid der allgemeinen Formel
   M¹ᵥM²_{w}Oₓ(OH)_{y}X_{z}, mit
   M¹ = Fe und M² = Mg^{II}. Ca^{II}, Sr^{II}, Ba^{II}, Ti^{III/IV}, Zr^{IV}, Cr^{III}, Fe^{II/III}, Co^{II/III}, Ni^{II},
   Cu^{II}, Ag^{I}, Zn^{II}, Al^{III}, Ga^{lll}, Sn^{II/IV}, Sb^{III/IV}, Bi^{III},
   X = Cl⁻, NO₃⁻, SO₄²⁻, CO₃²⁻ und
   v=1-3;w=0-3;x=0-6,y=0-12undz=0-1
   wobei v + w > 0 und x + y > 0 ist, und
   v, w, x und y im Falle von Suboxiden auch nicht ganzzahlige Koeffizienten sein können, und
(B) einer Schicht aus SiO₂ und/oder Al₂O₃ bzw. deren Hydraten,
enthalten.

Die erfindungsgemäßen Effektpigmente sind besonders geeignet zur Pigmentierung von Kunststoffen, da sie durch die Verkapselung der Übergangsmetalloxid-/hydroxid-Schicht mit SiO₂ und/oder Al₂O₃ eine deutlich geringere chemische Reaktivität an der Oberfläche aufweisen, und dadurch, insbesondere mit den phenolischen Bestandteilen im Kunststoff die Vergilbung deutlich unterdrücken. Ganz besonders geeignet sind die erfindungsgemäßen Effektpigmente aufgrund ihrer Körperfarbe in kosmetischen Formulierungen, die organische Substanzen, wie z. B. organische Wirkstoffe, UV-Filter, etc. enthalten. Mit den erfindungsgemäßen Effektpigmenten wird die Lagerstabilität von Formulierungen, die Übergangsmetall-sensitive organische Substanzen enthalten, drastisch erhöht.

Die erfindungsgemäßen Effektpigmente sind weiterhin sehr gut für die Anwendung als sogenannte "skin-corrector"-Pigmente, z. B. in Salben, Cremes und Presspudern, geeignet. "Skin-corrector"-Pigmente zeichnen sich in der Regel dadurch aus, dass sie koloristische Inhomogenitäten der Haut (z. B. rote Flecken, dunkle Augenringe) ausgleichen können, indem sie durch ihre Eigenfarbe die Farbinhomogenitäten der Hautstellen abschwächen oder idealerweise vollständig kompensieren. Von Nachteil ist für diese Anwendung allerdings, wenn der charakteristische Glanz dieser Pigmentklasse die Haut nach der Applizierung u.U. optisch "fettig" aussehen lässt. Dieser Nachteil wird bei den erfindungsgemäßen Effektpigmenten dadurch umgangen, indem die Oberfläche des Interferenzpigmentes mit Eisenionen-haltigen Hydroxid- bzw. Doppelhydroxiden belegt ist. Diese Schichten wirken als Streuzentren für das einfallende Licht und reduzieren so den Glanz des Pigmentes ohne die Interferenzfarbe so sehr abzuschwächen, dass es für diese Anwendung von Nachteil wäre. Bei Eisenionen-haltigen Hydroxid- bzw. Doppelhydroxiden hat man zudem den besonderen Vorteil, dass diese mit einer zusätzlichen haut-, beige- bis braunfarbenen Absorptivfarbe zum "skin-corrector"-Pigment beitragen. Gegenstand der Erfindung ist somit auch die Verwendung der erfindungsgemäßen Pigmente als "skin-corrector"-Pigmente.

Geeignete Basissubstrate für die erfindungsgemäßen Effektpigmente sind vorzugsweise transparente Plättchen, wie z. B. Glasplättchen, synthetische oder natürliche Glimmerplättchen, SiOₓ-Plättchen (x = ≤ 2,0, vorzugsweise ist x = 2), Al₂O₃-Plättchen, TiO₂-Plättchen, synthetische oder natürliche Eisenoxidplättchen, Metallplättchen, gegebenenfalls passiviert, wie z.B. Aluminiumplättchen, Plättchen aus Aluminiumbronzen, Messingbronzen, Zinkbronzen, Titanbronzen oder anderen vergleichbaren Materialien, Graphitplättchen, Liquid Crystal Polymers (LCPs), holographische Pigmente, BiOCl-Plättchen oder Gemische der genannten Plättchen. Bevorzugte Substratgemische sind folgende Kombinationen:
- synthetische oder natürliche Glimmerplättchen + Al₂O₃-Plättchen
- synthetische oder natürliche Glimmerplättchen + Glasplättchen
- synthetische oder natürliche Eisenoxidplättchen + synthetische oder natürliche Glimmerplättchen
- Aluminiumplättchen bzw. Bronzen + synthetische oder natürliche Glimmerplättchen
- Aluminiumplättchen bzw. Bronzen + Al₂O₃-Plättchen
- Aluminiumplättchen bzw. Bronzen + Glasplättchen
- BiOCI-Plättchen + Glasplättchen
- BiOCI-Plättchen + synthetische oder natürliche Glimmerplättchen

Bei den bevorzugt eingesetzten SiO₂-Plättchen handelt es sich um synthetische, dotierte oder undotierte, vorzugsweise undotierte, SiO₂-Plättchen, die über eine einheitliche Schichtdicke verfügen und z. B. gemäß der WO 93/08237 auf einem endlosen Band durch Verfestigung und Hydrolyse einer Wasserglaslösung hergestellt werden. Unter einheitlicher Schichtdicke wird dabei eine Schichtdickentoleranz von 3 bis 10 %, bevorzugt von 3 bis 5 %, der Gesamttrockenschichtdicke der Partikel verstanden. Die plättchenförmigen Siliziumdioxidpartikel liegen im Allgemeinen in amorpher Form vor. Synthetische Plättchen dieser Art haben gegenüber natürlichen Materialien, wie z. B. Glimmer, den Vorteil, dass die Schichtdicke im Hinblick auf die gewünschten Effekte eingestellt werden kann und die Schichtdickentoleranz begrenzt ist.

Die ganz besonders bevorzugten Glasplättchen können aus allen dem Fachmann bekannten Glastypen bestehen, wie z. B. Ca-Al-Borosilikatgläser, Fensterglas, C-Glas, E-Glas, ECR-Glas, Duran^{®}-Glas, Laborgeräteglas, optisches Glas. Insbesondere bevorzugt ist E-Glas, ECR-Glas und Ca-Al-Borosilikatgläser. Der Brechungsindex der Glasplättchen liegt vorzugsweise bei 1,45-1,80, insbesondere bei 1,50-1,70. Ferner sind als bevorzugte Substrate Glasplättchen aus dotiertem Glas geeignet. Als Dotierstoffe sind z. B. Fe, Bi, La, Nb, Ba, Ti, V, Ce, Au und Cu bzw. Gemische daraus, geeignet. Durch die Dotierung sind Gläser mit speziellen Eigenschaften, wie z. B. einem hohen Brechungsindex bis 2,3 oder starker Eigenfarbe einsetzbar.

Als Substrat kommen vorzugsweise plättchenförmige Substrate auf Basis von Ca-AI-Borosilikat (z. B. Ronastar^{®} von der Fa. Merck KGaA), SiO₂ (z.B. Colorstream^{®} von der Firma Merck KGaA), Al₂O₃ (z. B. Xirallic^{®} von der Fa. Merck KGaA), natürlichem blättchenförmigem Eisenoxid (z. B. MIOX^{®} von der Fa. Kärntner Montan Industrie), Graphit, künstlichem plättchenförmigem Eisenoxid (z. B. TAROX^{®} von der Fa. Titan Kogyo) oder metallischem Aluminium in Frage.

Die Substratgemische können auch derart aussehen, dass Plättchen mit unterschiedlichen Partikelgrößen gemischt werden. In diesem Fall handelt es sich vorzugsweise um Gemische aus Glimmerplättchen mit unterschiedlichen Partikelgrößen, wie z. B. 1 - 15 µm, 1 - 25 µm, 3 - 8 µm, 3 - 10 µm, 5 - 25 µm, 5 - 30 µm, 5 - 50 µm, 17 - 26 µm, 10 - 60 µm, 5 - 100 µm, 10 - 100 µm, 10 - 125 µm, 10 - 150 µm, 20 - 180 µm, 20 - 200 µm, 45 - 500 µm. Dabei können durch geeignete Wahl der Partikelgrößen in einer Mischung gezielt, die dem Fachmann bekannten speziellen Eigenschaften und Erscheinungsformen des Produktes eingestellt werden. Diese sind z. B.
- hohe Farbbrillanz bei Gemischen von Teilchen mit enger Partikelgrößenverteilung;
- Kombination aus relativ hohem Deckvermögen und Glitzern bei Gemischen bestehend aus feinen Partikeln (vorzugsweise 1-25 µm) und groben Partikeln (vorzugsweise ≥100 µm, insbesondere 100-500 µm).

Die Größe der Basissubstrate ist an sich nicht kritisch und kann auf den jeweiligen Anwendungszweck abgestimmt werden. In der Regel haben die plättchenförmigen Substrate eine Dicke zwischen 0,05 und 5 µm, insbesondere zwischen 0,1 und 4,5 µm. Glasplättchen haben vorzugsweise eine Dicke von ≤ 1 µm, insbesondere von ≤ 900 nm und ganz besonders bevorzugt von ≤ 500 nm. Die Ausdehnung in den beiden anderen Bereichen beträgt üblicherweise zwischen 1 und 250 µm, vorzugsweise zwischen 2 und 200 µm, und insbesondere zwischen 5 und 150 µm. Die Partikelgrößen werden mit dem Fachmann bekannten und handelsüblichen Geräten (z. B. von der Fa. Malvern, Fa. Horiba) mittels Laserbeugung am Pulver oder an Pigmentsuspensionen bestimmt.

Die Substrate besitzen vorzugsweise einen Formfaktor (aspect ratio: Durchmesser / Dicke-Verhältnis) von 5 - 750, insbesondere von 10 - 300 und ganz besonders bevorzugt von 20 - 200.

Die Basissubstrate können unbeschichtet oder ein- oder mehrfach mit ein oder mehreren, vorzugsweise farblosen, Metalloxiden, insbesondere hochbrechenden Metalloxiden, beschichtet sein. Bei den Metalloxiden sind insbesondere zu nennen TiO₂ in der Rutil- oder Anatas-Modifikation, Zirkonoxid, Zinnoxid, Zinkoxid, Siliziumdioxid. Vorzugsweise sind die Basissubstrate mit ein, zwei, drei oder vier Schichten, insbesondere mit einer Metalloxid-Schicht belegt. Sofern das Basissubstrat drei Oxidschichten aufweist handelt es sich vorzugsweise um alternierende hoch- und niedrigbrechende Schichten, wie z. B. eine Schichtenfolge TiO₂ - SiO₂ - TiO₂. Besonders bevorzugte Basissubstrate sind natürliche und/oder synthetische Glimmerplättchen, SiO₂-Plättchen, Al₂O₃-Plättchen, Fe₂O₃-Plättchen, Glasplättchen, passivierte Aluminiumplättchen, Plättchen aus Aluminiumbronzen, Messingbronzen, Zinkbronzen, Titanbronzen, oder anderen vergleichbaren Materialien, mit TiO₂ beschichtete Glimmer-, Glas-, SiO₂-, Al₂O₃-Plättchen, oder mit TiO₂-SiO₂-TiO₂-beschichtete Glimmer-, Glas-, SiO₂-, Al₂O₃-Plättchen, mit SiO₂-TiO₂- beschichtete Glasplättchen, mit SiO₂-TiO₂-SiO₂-TiO₂-beschichtete Glasplättchen, mit SiO₂ beschichtete Glas- oder Al₂O₃-Plättchen.

Besonders bevorzugte Substrate sind somit wie folgt aufgebaut:
Substrat + hochbrechendes Metalloxid + Schichtpaket (A)(B)
Substrat + SiO₂ + hochbrechendes Metalloxid + Schichtpaket (A)(B)
Substrat + Schichtpaket (A)(B)
Substrat + SiO₂ + Schichtpaket (A)(B)
Substrat + hochbrechendes Metalloxid + niedrigbrechendes Metalloxid + hochbrechendes Metalloxid + Schichtpaket (A)(B)
Substrat + SiO₂ + hochbrechendes Metalloxid + niedrigbrechendes Metalloxid + hochbrechendes Metalloxid + Schichtpaket (A)(B)

Der Brechungsindex der beschichteten oder unbeschichteten Substrate beträgt vorzugsweise 1,20 - 2,20, insbesondere 1,50 - 1,70. Der Brechungsindex des nachbeschichteten Substrates ist aber an sich kein kritischer Parameter. So sollen die angegebenen Bereiche auch nur der Erläuterung dienen ohne einzuschränken. Es sind natürlich, wie im Falle von Metallplättchen, auch Substrate mit höherem Brechungsindex geeignet.

Unter hochbrechenden Beschichtungen sind in dieser Patentanmeldung Schichten mit einem Brechungsindex von > 1,8, unter niedrigbrechenden Schichten solche mit n ≤ 1,8 zu verstehen.

Sofern das Substratplättchen mit einer TiO₂-Schicht belegt ist, kann das TiO₂ in der Rutil- oder Anatasmodifikation vorliegen. Vorzugsweise liegt es als Rutil vor. In diesem Fall erfolgt vorzugsweise vor der Belegung mit TiO₂ eine flächendeckende oder partielle Belegung mit SnO₂ oder eine partielle Belegung mit SnO₂-Keimen. Diese sehr dünne SnO₂-Schicht weist Dicken von maximal 10 nm, vorzugsweise ≤ 5 nm, auf.

Bei der Schicht (A) handelt es sich vorzugsweise um eine Eisenoxid(hydroxid)-Schicht, eine Mischoxidschicht oder um ein Doppelhydroxid, insbesondere eine Schicht aus Fe₂O₃, Fe₃O₄, FeOOH, FeTiO₃, Fe₂TiO₅, aus Fe(OH)₃/Ca(OH)₂-Gemisch, Fe(OH)₃/Al(OH)₃-Gemisch, Fe(OH)₃/Zn(OH)₂-Gemisch oder aus Fe(OH)₃/Mg(OH)₂-Gemisch. Das Mischverhältnis bei den Hydroxid-Gemischen kann dabei zwischen 0,1 : 99,9 und 99,9 : 0,1 Massenteilen liegen.

Die Dicke der Schicht (A) auf dem beschichteten oder unbeschichteten Substrat kann in Abhängigkeit vom gewünschten Effekt selbstverständlich in weiten Bereichen variiert werden.

Die Schicht (A) weist vorzugsweise Dicken von 2 - 350 nm, insbesondere von 5 - 200 nm, auf. Für die Steuerung von Farbton, Glanz und Farbstärke sind Schichtdicken von 20 - 150 nm bevorzugt.

Die niedrigbrechende Beschichtung (B) dient zur Verkapselung der Schicht (A) und besteht vorzugsweise aus SiO₂ und/oder Al₂O₃. Sofern es sich um ein Gemisch aus SiO₂ und Al₂O₃ handelt, beträgt das Mischungsverhältnis 1 : 100 bis 100 : 1, vorzugsweise 1 : 50 bis 50 : 1, insbesondere 1 : 10 bis 10 : 1. Die Schicht (B) kann 0,005 - 10 Gew.%, vorzugsweise 0,01 - 8 Gew.%, insbesondere 0,05 - 5 Gew.% an weiteren Oxiden oder Hydroxiden aus der Gruppe V, Zr, Zn, Ce, Ti, B, Na, K, Mg, Ca und/oder Mn enthalten. Von den genannten Oxiden und Hydroxiden sind insbesondere jene von V, Zr, Ce und/oder Zn bevorzugt. Die Dicke der finalen Schicht (B) beträgt 2 - 200 nm, vorzugsweise 10 - 80 nm, insbesondere 10 - 60 nm.

Bei besonders bevorzugten erfindungsgemäßen Effektpigmenten beträgt der Anteil der Schicht (B) 5-60 Gew.%, insbesondere 10-30 Gew.% und besonders bevorzugt 12-20 Gew.% bezogen auf das Gesamtpigment.

Die Ölzahl der erfindungsgemäßen Effektpigmente (bestimmt nach DIN EN ISO 787-5: 1995-10) beträgt vorzugsweise 5-100, insbesondere 5-50 und ganz besonders bevorzugt 20-40. Die Ölzahl der erfindungsgemäßen Pigmente ist aber an sich nicht kritisch.

Die Eisenionen-haltigen Pigmente zeichnen sich nicht nur durch ihre attraktiven optischen Effekte aus, sondern zeigen in Polymeren, insbesondere in phenolhaltigen Kunststoffen und Lacken, eine deutlich verbesserte Lagerstabilität. Weiterhin zeichnen sich diese Pigmente durch eine erhöhte mechanische Stabilität aus. Im Vergleich zu Effektpigmenten, die keine Passivierung durch eine Schicht (B) aufweisen, wird im Kunststoff keine oder nur eine geringe Hell-/Dunkel-Vergilbung beobachtet, d.h. die erfindungsgemäßen Pigmente zeigen keine und nur eine geringe Oberflächenreaktion mit den Kunststoffkomponenten.

Gegenstand der Erfindung ist weiterhin die Verwendung der erfindungsgemäßen Effektpigmente in Farben, Lacken, insbesondere Automobillacken, Industrielacken, Pulverlacken, Druckfarben, Sicherheitsdruckfarben, Kunststoffen, keramischen Materialien, Gläsern, Papier, in Tonern für elektrophotographische Druckverfahren, im Saatgut, in Gewächshausfolien und Zeltplanen, als Absorber bei der Lasermarkierung von Papier und Kunststoffen, als Absorber beim Laserschweißen von Kunststoffen und in kosmetischen Formulierungen. Weiterhin sind die erfindungsgemäßen Pigmente auch zur Herstellung von Pigmentanteigungen mit Wasser, organischen und/oder wässrigen Lösemitteln, Pigmentpräparationen sowie zur Herstellung von Trockenpräparaten, wie z. B. Granulaten, Chips, Pellets, Briketts, etc., geeignet. Die Trockenpräparate sind insbesondere für Druckfarben und in der Kosmetik geeignet.

Besonders bevorzugte erfindungsgemäße Effektpigmente werden nachfolgend aufgeführt:
Substrat + (SiO₂) + Fe₂O₃ + SiO₂
Substrat + (SiO₂) + TiO₂ + Fe₂O₃ + SiO₂
Substrat + (SiO₂) + TiO₂ + SiO₂ + TiO₂ + Fe₂O₃ + SiO₂
Substrat + (SiO₂) + FeOOH + SiO₂
Substrat + (SiO₂) + TiO₂ + FeOOH + SiO₂
Substrat + (SiO₂) + Fe₂TiO₅ + SiO₂
Substrat + (SiO₂) + TiO₂ + Fe₂TiO₅ + SiO₂
Substrat + (SiO₂) + FeTiO₃ + SiO₂
Substrat + (SiO₂) + TiO₂ + FeTiO₃ + SiO₂
Substrat + (SiO₂) + Fe(OH)₃/Mg(OH)₂ + SiO₂
Substrat + (SiO₂) + TiO₂ + Fe(OH)₃/Mg(OH)₂ + SiO₂
Substrat + (SiO₂) + Fe(OH)₃/Ca(OH)₂-+ SiO₂
Substrat + (SiO₂) + TiO₂ + Fe(OH)₃/Ca(OH)₂+ SiO₂
Substrat + (SiO₂) + Fe₃O₄ + SiO₂
Substrat + (SiO₂) + TiO₂ + Fe₃O₄ + SiO₂
Substrat + (SiO₂) + Fe(OH)₃/Al(OH)₃ + SiO₂
Substrat + (SiO₂) + TiO₂ + Fe(OH)₃/Al(OH)₃ + SiO₂
Substrat + (SiO₂) + TiO₂ + FeCa₂(OH)₆Cl + SiO₂
Substrat + (SiO₂) + TiO₂ + FeCa₂(OH)₆NO₃ + SiO₂
Substrat + (SiO₂) + TiO₂ + FeMg₂(OH)₆CO₃ + SiO₂
Substrat + (SiO₂) + TiO₂ + FeZn₂(OH)₆CO₃ + SiO₂
Substrat + (SiO₂) + TiO₂ + CrO₃ + Fe₃O₄ + SiO₂
Substrat + (SiO₂) + Fe(OH)₃/Zn(OH)₂ + SiO₂
Substrat + (SiO₂) + Fe(OH)₃/Zn(OH)₂ + SiO₂/Al₂O₃
Substrat + (SiO₂) + Fe₂O₃ + SiO₂ + Fe₂O₃ + SiO₂/Al₂O₃
Substrat + (SiO₂) + Fe₂O₃ + SiO₂ + Fe₂O₃ + SiO₂
Substrat + (SiO₂) + Fe₃O₄ + SiO₂ + Fe₃O₄ + SiO₂/Al₂O₃
Substrat + (SiO₂) + Fe₃O₄ + SiO₂ + Fe₃O₄ + SiO₂
Substrat + (SiO₂) + Fe₂O₃ + SiO₂/Al₂O₃
Substrat + (SiO₂) + TiO₂ + Fe₂O₃ + SiO₂/Al₂O₃
Substrat + (SiO₂) + TiO₂ + SiO₂ + TiO₂ + Fe₂O₃ + SiO₂/Al₂O₃
Substrat + (SiO₂) + FeOOH + SiO₂/Al₂O₃
Substrat + (SiO₂) + TiO₂ + FeOOH + SiO₂/Al₂O₃
Substrat + (SiO₂) + Fe₂TiO₅ + SiO₂/Al₂O₃
Substrat + (SiO₂) + TiO₂ + Fe₂TiO₅ + SiO₂/Al₂O₃
Substrat + (SiO₂) + FeTiO₃ + SiO₂/Al₂O₃
Substrat + (SiO₂) + TiO₂ + FeTiO₃ + SiO₂/Al₂O₃
Substrat + (SiO₂) + Fe(OH)₃/Mg(OH)₂ + SiO₂/Al₂O₃
Substrat + (SiO₂) + TiO₂ + Fe(OH)₃/Mg(OH)₂ + SiO₂/Al₂O₃
Substrat + (SiO₂) + Fe(OH)₃/Ca(OH)₂-+ SiO₂/Al₂O₃
Substrat + (SiO₂) + TiO₂ + Fe(OH)₃/Ca(OH)₂+ SiO₂/Al₂O₃
Substrat + (SiO₂) + Fe₃O₄ + SiO₂/Al₂O₃
Substrat + (SiO₂) + TiO₂ + Fe₃O₄ + SiO₂/Al₂O₃
Substrat + (SiO₂) + Fe(OH)₃/Al(OH)₃ + SiO₂/Al₂O₃
Substrat + (SiO₂) + TiO₂ + Fe(OH)₃/AI(OH)₃ + SiO₂/Al₂O₃

Sofern das Substrat ein Glas- oder Aluminiumplättchen ist, wird vorzugsweise das Substrat direkt mit einer SiO₂-Schicht belegt. Bei der erfindungsgemäßen Anwendung als "skin-corrector"-Pigment werden als Substrat vorzugsweise natürlicher oder synthetischer Glimmer und/oder Glasplättchen eingesetzt, insbesondere mit TiO₂ (Rutil) beschichteter natürlicher oder synthetischer Glimmer oder Glasplättchen, gegebenenfalls mit SiO₂ beschichtete Glasplättchen.

Die Metalloxid(hydroxid)-Schichten werden vorzugsweise nasschemisch aufgebracht, wobei die zur Herstellung von Effektpigmenten entwickelten nasschemischen Beschichtungsverfahren angewendet werden können. Derartige Verfahren sind z.B. beschrieben in DE 14 67 468, DE 19 59 988, DE 20 09 566, DE 22 14 545, DE 22 15 191, DE 22 44, 298, DE 23 13 331, DE 15 22 572, DE 31 37 808, DE 31 37 809, DE 31 51 343, DE 31 51 354, DE 31 51 355, DE 32 11 602, DE 32 35 017 oder auch in weiteren dem Fachmann bekannten Patentdokumenten und sonstigen Publikationen.

Bei der Nassbeschichtung werden die Substratpartikel in Wasser suspendiert und mit ein oder mehreren hydrolysierbaren Metallsalzen oder einer Wasserglaslösung bei einem für die Hydrolyse geeigneten pH-Wert versetzt, der so gewählt wird, dass die Metalloxide bzw. Metalloxidhydrate direkt auf den Plättchen ausgefällt werden, ohne dass es zu Nebenfällungen kommt. Der pH-Wert wird üblicherweise durch gleichzeitiges Zudosieren einer Base und/oder Säure konstant gehalten. Anschließend werden die Pigmente abgetrennt, gewaschen und bei 50 - 150 °C für 6 - 18 h getrocknet und falls die Oxidschichten gewünscht sind bei 0,5 - 3 h geglüht, wobei die Glühtemperatur im Hinblick auf die jeweils vorliegende Beschichtung optimiert werden kann. In der Regel liegen die Glühtemperaturen, je nach Substrat und Beschichtung, zwischen 500 und 1000 °C, vorzugsweise zwischen 600 und 900 °C. Im Falle von Hydroxyoxiden, wie z. B. FeOOH und Hydroxiden/Hydroxidgemischen, wie z. B. Fe(OH)₃/Mg(OH)₂ oder FeCa₂(OH)₆NO₃ entfällt der Glühschritt und die Pigmente werden nur bei max. 120 °C getrocknet. Falls gewünscht bzw. bei einzelnen Schichtabfolgen notwendig (z. B. Hydroxid-Schicht auf einer OxidSchicht), können die Pigmente nach Aufbringen einzelner Beschichtungen abgetrennt, getrocknet und ggf. geglüht werden, um dann zur Auffällung der weiteren Schichten wieder resuspendiert zu werden.

Die Auffällung der SiO₂-Schicht auf das Substrat erfolgt in der Regel durch Zugabe einer Kalium- oder Natronwasserglas-Lösung bei einem geeigneten pH-Wert.

Weiterhin kann die Beschichtung auch in einem Wirbelbettreaktor durch Gasphasenbeschichtung erfolgen, wobei z. B. die in EP 0 045 851 und EP 0 106 235 zur Herstellung von Effektpigmenten vorgeschlagenen Verfahren entsprechend angewendet werden können.

Der Farbton der erfindungsgemäßen Effektpigmente kann in sehr weiten Grenzen durch die unterschiedliche Wahl der Schichtzusammensetzungen, Schichtkombinationen, der Belegungsmengen bzw. der daraus resultierenden Schichtdicken variiert werden. Die Feinabstimmung für einen bestimmten Farbton kann dabei über die reine Mengenwahl hinaus durch visuell oder messtechnisch kontrolliertes Anfahren der gewünschten Farbe erreicht werden.

Die Absorptivfarbe der Eisen-haltigen Beschichtung des Interferenzpigmentes kann durch mehrere Stellhebel gezielt eingestellt werden. Diese sind z. B.:
- Fällung von Fe(OH)₃ bzw. FeOOH - durch die Menge des aufgefällten Hydroxides kann die Farbe des Pigmentes eingestellt werden.
- Fällung von Fe(OH)₃ bzw. FeOOH in Kombination mit weißfarbenen Erdalkalimetall-, Erdmetall- oder Übergangsmetallhydroxiden, wie z. B. Ca(OH)₂, Mg(OH)₂, AI(OH)₃, Zn(OH)₂. Das Mischungsverhältnis bestimmt die Helligkeit und den Gelbanteil der Beschichtung. Zudem kann die Farbe des Pigmentes durch die Menge der aufgefällten Hydroxid-Mischung eingestellt werden.
- Fällung von Eisen-haltigen Doppelhydroxiden der allgemeinen Formel [FeM²₂OH)₆]X. Hierbei kann M² = Mg^{II}, Ca^{II}, Sr^{II}, Ba^{II}, Zn^{II} sein. In diesem Fall ist das stöchiometrische Verhältnis von Fe³⁺ und M² vorgegeben. Die Farbe kann dann durch die Menge des aufgefällten Doppelhydroxides und die Farbe des M²-Kations eingestellt werden.

In den oben genannten drei Fällen kann durch die Trocken- bzw. Glühtemperatur die Endfarbe des Pigmentes noch zusätzlich sehr gezielt beeinflusst werden.

Durch den Gehalt an Eisen-Ionen oder Ionen anderer Übergangsmetalle besteht natürlich die Gefahr, dass die Lagerstabilität in Hinsicht auf Zerstörung der kosmetischen Wirksubstanz und/oder der organischen Formulierungsbestandteile negativ beeinflusst wird. Auch in diesem Fall ist es demnach von großem Vorteil diese "skin-corrector"-Pigmente mit einer SiO₂ und/oder Al₂O₃-Schicht thermochemisch und photochemisch zu passivieren.

Zur Erhöhung der Licht-, Wasser- und Wetterstabilität empfiehlt es sich häufig, in Abhängigkeit vom Einsatzgebiet, das fertige Effektpigment einer Nachbeschichtung oder Nachbehandlung zu unterziehen. Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebenen Verfahren in Frage. Durch diese Nachbeschichtung wird die chemische und photochemische Stabilität weiter erhöht oder die Handhabung des Pigments, insbesondere die Einarbeitung in unterschiedliche Medien, erleichtert. Zur Verbesserung der Benetzbarkeit, Dispergierbarkeit und/oder Verträglichkeit mit den Anwendermedien können beispielsweise funktionelle Beschichtungen aus Al₂O₃ oder ZrO₂ oder deren Gemische auf die Pigmentoberfläche aufgebracht werden. Weiterhin sind organische Nachbeschichtungen möglich, z.B. mit Silanen, wie beispielsweise beschrieben in der EP 0 090259, EP 0 634 459, WO 99/57204, WO 96/32446, WO 99/57204, U.S. 5,759,255, U.S. 5,571,851, WO 01/92425 oder in J.J. Ponjeé, Philips Technical Review, Vol. 44, No. 3, 81 ff. und P.H. Harding J.C. Berg, J. Adhesion Sci. Technol. Vol. 11 No. 4, S. 471-493.

Die Wahl der abschließenden Nachbeschichtung ist nur insofern limitiert, als sicher gestellt sein sollte, dass nicht erneut oberflächenreaktive Übergangsmetallverbindungen bzw. Übergangsmetallkationen in nachteilig hoher Menge in das Endprodukt eingebracht werden.

Die erfindungsgemäßen Pigmente mit Körperfarbe sind mit einer Vielzahl von Farbsystemen kompatibel, vorzugsweise aus dem Bereich der Lacke, Farben, Druckfarben und kosmetischen Formulierungen. Für die Herstellung der Druckfarben, z. B. für den Tiefdruck, Flexodruck, Offsetdruck, Offsetüberdrucklackierung, ist eine Vielzahl von Bindern, insbesondere wasserlösliche Typen, geeignet, wie sie z. B. von den Firmen BASF, Marabu, Pröll, Sericol, Hartmann, Gebr. Schmidt, Sicpa, Aarberg, Siegberg, GSB-Wahl, Follmann, Ruco oder Coates Screen INKS GmbH vertrieben werden. Die Druckfarben können auf Wasserbasis oder Lösemittelbasis aufgebaut sein. Weiterhin sind die Pigmente auch für die Lasermarkierung von Papier und Kunststoffen sowie für die Anwendungen im Agrarbereich, z. B. für Gewächshausfolien, sowie z. B. für die Farbgebung von Zeltplanen, geeignet.

Besonders geeignet sind die erfindungsgemäßen Effektpigmente infolge ihrer erhöhten chemischen Stabilisierung für Polymere, insbesondere Kunststoffe. Die Kunststoffe enthalten vorzugsweise 0,01 - 10 Gew.%, insbesondere 0,1 - 5 Gew.% und ganz besonders bevorzugt 0,2 - 2,5 Gew.%, der erfindungsgemäßen Pigmente. Selbst bei niedrigen Pigmentkonzentrationen von < 0,5 Gew.% zeigt sich keine signifikante Dunkelvergilbung von Kunststoffen enthaltend phenolhaltige Additive. Weiterhin sind die Effektpigmente für Lackformulierungen geeignet.

Da die erfindungsgemäßen Effektpigmente mit eigenfarbigen Schichten aus Übergangsmetalloxiden, Übergangsmetallhydroxyoxiden und Übergangsmetallhydroxiden/-hydroxidgemischen (z. B. Fe/Ti, Fe, Cu enthaltend) oftmals einen besonders edlen Farbton im Gold-, Messing-, Bronze-, Kupfer-Bereich zeigen und sich in der Regel durch metallischen Glanz und hohe Brillanz auszeichnen, lassen sich mit ihnen besonders wirksame Effekte in den verschiedenen Anwendungsmedien erzielen, z. B. in kosmetischen Formulierungen, wie Nagellacken, Lippenstiften, Presspudern, Gelen, Lotionen, Emulsionen, Seifen, Zahnpasten und besonders bevorzugt in Selbstbräunungsformulierungen.

Die erfindungsgemäßen Effektpigmente lassen sich, in einer bevorzugten Anwendungsart, sehr gut mit kosmetischen Wirkstoffen kombinieren. Geeignete Wirkstoffe sind z. B. Insect Repellents, anorganische UV-Filter, wie z. B. TiO₂, UV A/BC-Schutzfilter (z. B. OMC, B3, MBC), auch in verkapselter Form, Anti-Ageing-Wirkstoffe, Vitamine und deren Derivate (z. B. Vitamin A, C, E, etc.) sowie weitere kosmetische Wirkstoffe, wie z.B. Bisabolol, LPO, VTA, Ectoin, Emblica, Allantoin, Bioflavanoide und deren Derivate.

Bei Selbstbräunungscremes, -lotionen, -sprays, etc., enthaltend beispielsweise die Selbstbräuner DHA (1,3-Dihydroxyaceton) oder Erythrulose bzw. ein Gemisch beider Stoffe und ein Effektpigment mit abschließender TiO₂- oder Fe₂O₃-Schicht, wird das DHA, insbesondere wenn das TiO₂ in der Anatas-Modifikation vorliegt, in einem Zeitraum von 3 Monaten relativ rasch in der Formulierung abgebaut. Bei Verwendung der erfindungsgemäßen Pigmente in der Formulierung bleibt das DHA hingegen in seiner Wirkung weitestgehend erhalten.

Die Selbstbräunersubstanzen werden gewöhnlich als Lösung oder Emulsion auf die Haut versprüht oder manuell aufgetragen. Im Vergleich zu den Pigmenten aus dem Stand der Technik wird die Lagerstabilität von Selbstbräunungscremes, -lotionen oder -sprays enthaltend die erfindungsgemäßen Pigmenten mit den gängigen Selbstbräunersubstanzen, wie z.B. 1,3-Dihydroxyaceton und Erythrulose, deutlich erhöht.

Vorzugsweise enthalten die Selbstbräunungscremes / -sprays 0,5 - 5,0 Gew.%, vorzugsweise 1 - 3 Gew.% an erfindungsgemäßen Effektpigmenten und die Selbstbräunungssubstanz in Mengen von 0,01 bis 20 Gew.%, vorzugsweise in Mengen von 0,05 Gew.% bis 10 Gew.%, insbesondere von 1-8 Gew.%. Bei einer Mischung von Selbstbräunersubstanzen liegt das Gewichtsprozentverhältnis bevorzugt zwischen 1 : 10 und 10 : 1. Eine bevorzugte Mischung von Selbstbräunersubstanzen ist die Mischung von DHA und Erythrulose. Beispielsweise werden Mischungsverhältnisse von DHA : Erythrulose von 2:1 und 3:1 eingesetzt. Weiterhin bevorzugt ist als Selbstbräuner das sogenannte "DHA Plus". Dieses enthält neben 1,3-Diydroxyaceton und Magnesiumstearat zur Maskierung/Eliminierung/ Neutralisierung des Formaldehyds Natriumdisulfit (Na₂S₂O₅, INCl: Sodium disulfite).

Es versteht sich von selbst, dass für die verschiedenen Anwendungszwecke die erfindungsgemäßen Effektpigmente auch vorteilhaft in Abmischung mit organischen Farbstoffen, holographischen Pigmenten, LCPs (Liquid Crystal Polymers), organischen Pigmenten oder anorganischen Pigmenten, wie z.B. transparenten und deckenden Weiß-, Bunt- und Schwarzpigmenten sowie mit plättchenförmigen Eisenoxiden, und herkömmlichen transparenten, bunten und schwarzen Glanzpigmenten auf der Basis von metalloxidbeschichteten Glimmer-, Glas-, Al₂O₃-, Fe₂O₃- und SiO₂- und passivierten AluminiumPlättchen, etc., verwendet werden können. Die erfindungsgemäßen Pigmente können in jedem Mengenverhältnis mit handelsüblichen Pigmenten und Füllstoffen gemischt werden.

Als Füllstoffe sind z. B. zu nennen natürlicher und synthetischer Glimmer, Nylon Powder, reine oder gefüllte Melaminharze, Talcum, SiO₂, Gläser, Kaolin, Oxide oder Hydroxide von Aluminium, Magnesium, Calcium, Zink, BiOCl, Bariumsulfat, Calciumsulfat, Calciumcarbonat, Magnesiumcarbonat, Kohlenstoff, sowie physikalische oder chemische Kombinationen dieser Stoffe.

Bezüglich der Partikelform des Füllstoffes gibt es keine Einschränkungen. Sie kann den Anforderungen gemäß z. B. plättchenförmig, sphärisch, oder nadelförmig, aber auch völlig unregelmäßig geformt sein.

Kosmetische Formulierungen, welche die erfindungsgemäßen Effektpigmente enthalten, können dem lipophilen, hydrophilen oder hydrophoben Typ angehören. Bei heterogenen Formulierungen mit diskreten wässrigen und nichtwässrigen Phasen können die erfindungsgemäßen Effektpigmente in jeweils nur einer der beiden Phasen enthalten oder auch über beide Phasen verteilt sein.

Die pH-Werte der Formulierungen können zwischen 1 und 14, bevorzugt zwischen 2 und 11 und besonders bevorzugt zwischen 5 und 8 liegen.

Den Konzentrationen der erfindungsgemäßen Effektpigmente in der Formulierung sind keine Grenzen gesetzt. Sie können - je nach Anwendungsfall - zwischen 0,001 (rinse-off-Produkte, z. B. Duschgele) - 100 % (z. B. Glanzeffekt-Artikel für besondere Anwendungen) liegen.

Selbstverständlich können die erfindungsgemäßen Pigmente in den Formulierungen auch mit jeder Art von Roh- und Hilfsstoffen kombiniert werden. Dazu gehören u.a. Öle, Fette, Wachse, Filmbildner, Konservierungsmittel, Tenside, Antioxidantien, wie z. B. Vitamin C oder Vitamin E, Stabilisatoren, Geruchsverstärker, Silikonöle, Emulgatoren, Lösemittel, wie z. B. Ethanol, oder Ethylacetat oder Butylacetat, und allgemein anwendungstechnische Eigenschaften bestimmende Hilfsstoffe, wie z. B. Verdicker und rheologische Zusatzstoffe wie etwa Bentonite, Hektorite, Siliciumdioxide, Ca-Silicate, Gelatinen, hochmolekulare Kohlenhydrate und/oder oberflächenaktive Hilfsmittel, etc.

Organische UV-Filter werden in der Regel in einer Menge von 0,5 - 10 Gew.%, vorzugsweise 1 - 8 Gew.%, anorganische Filter von 0,1 - 30 Gew.% in kosmetische Formulierungen eingearbeitet.

Die erfindungsgemäßen Zubereitungen können darüber hinaus weitere übliche hautschonende oder hautpflegende Wirkstoffe enthalten. Dies können prinzipiell alle dem Fachmann bekannten Wirkstoffe sein. Besonders bevorzugte Wirkstoffe sind Pyrimidincarbonsäuren und/oder Aryloxime.

Unter den kosmetischen Anwendungen ist insbesondere die Verwendung von Ectoin und Ectoin-Derivaten zur Pflege von gealterter, trockener oder gereizter Haut zu nennen. So wird in der EP-A-0 671 161 offenbart, dass Ectoin und Hydroxyectoin in kosmetischen Zubereitungen, wie z. B. Pudern, Seifen, tensidhaltigen Reinigungsprodukten, Lippenstiften, Rouge, Make-Up, Pflegecremes und Sonnenschutzpräparaten, eingesetzt werden können.

Als Anwendungsform der kosmetischen Formulierungen seien z. B. genannt: Lösungen, Suspensionen, Emulsionen, PIT-Emulsionen, Pasten, Salben, Gele, Cremes, Lotionen, Puder, Seifen, tensidhaltige Reinigungspräparate, Öle, Aerosole und Sprays. Weitere Anwendungsformen sind z. B. Sticks, Shampoos und Duschbäder. Der Zubereitung können beliebige übliche Trägerstoffe, Hilfsstoffe und gegebenenfalls weitere Wirkstoffe zugesetzt werden.

Salben, Pasten, Cremes und Gele können die üblichen Trägerstoffe enthalten, z. B. tierische und pflanzliche Fette, Wachse, Paraffine, Stärke, Traganth, Cellulosederivate, Polyethylenglykole, Silicone, Bentonite, Kieselsäure, Talkum und Zinkoxid oder Gemische dieser Stoffe.

Puder und Sprays können die üblichen Trägerstoffe enthalten, z. B. Milchzucker, Talkum, Kieselsäure, Aluminiumhydroxid, Calciumsilikat und Polyamid-Pulver oder Gemische dieser Stoffe. Sprays können zusätzlich die üblichen Treibmittel, z. B. Chlorfluorkohlenwasserstoffe, Propan/Butan oder Dimethylether, enthalten.

Lösungen und Emulsionen können die üblichen Trägerstoffe wie z. B. Lösungsmittel, Lösungsvermittler und Emulgatoren, z.B. Wasser, Ethanol, Isopropanol, Ethylcarbonat, Ethlyacetat, Benzylalkohol, Benzylbenzoat, Propylenglykol, 1,3-Butylglykol, Öle, insbesondere Baumwollsaatöl, Erdnussöl, Maiskeimöl, Olivenöl, Rizinusöl und Sesamöl, Glycerinfettsäureester, Polyethylenglykole und Fettsäureester des Sorbitans oder Gemische dieser Stoffe enthalten.

Suspensionen können die üblichen Trägerstoffe wie flüssige Verdünnungsmittel, z. B. Wasser, Ethanol oder Propylenglykol, Suspendiermittel, z. B. ethoxylierte Isostearylalkohole, Polyoxyethylensorbitester und Polyoxyethylensorbitanester, mikrokristalline Cellulose, Aluminiummetahydroxid, Bentonit, Agar-Agar und Traganth oder Gemische dieser Stoffe enthalten.

Seifen können die üblichen Trägerstoffe wie Alkalisalze von Fettsäuren, Salze von Fettsäurehalbestern, Fettsäureeiweißhydrolysaten, Isothionate, Lanolin, Fettalkohol, Pflanzenöle, Pflanzenextrakte, Glycerin, Zucker oder Gemische dieser Stoffe enthalten.

Tensidhaltige Reinigungsprodukte können die üblichen Trägerstoffe wie Salze von Fettalkoholsulfaten, Fettalkoholethersulfaten, Sulfobernsteinsäurehalbestern, Fettsäureeiweißhydrolysaten, Isothionate, Imidazoliniumderivate, Methyltaurate, Sarkosinate, Fettsäureamidethersulfate, Alkylamidobetaine, Fettalkohole, Fettsäureglyceride, Fettsäurediethanolamide, pflanzliche und synthetische Öle, Lanolinderivate, ethoxylierte Glycerinfettsäureester oder Gemische dieser Stoffe enthalten.

Gesichts- und Körperöle können die üblichen Trägerstoffe wie synthetische Öle, wie z. B. Fettsäureester, Fettalkohole, Silikonöle, natürliche Öle wie Pflanzenöle und ölige Pflanzenauszüge, Paraffinöle, Lanolinöle oder Gemische dieser Stoffe enthalten.

Die kosmetischen Zubereitungen können in verschiedenen Formen vorliegen. So können sie z. B. eine Lösung, eine wasserfreie Zubereitung, eine Emulsion oder Mikroemulsion vom Typ Wasser-in-Öl (W/O) oder vom Typ Öl-in-Wasser (O/W), eine multiple Emulsion, beispielsweise vom Typ Waser-in-Öl-in-Wasser (W/O/W), ein Gel, einen festen Stift, eine Salbe oder auch ein Aerosol darstellen. Es ist auch vorteilhaft, Ectoine in verkapselter Form darzureichen, z. B. in Kollagenmatrices und anderen üblichen Verkapselungsmaterialien, z. B. als Celluloseverkapselungen, in Gelatine, Wachsmatrices oder liposomal verkapselt. Insbesondere Wachsmatrices, wie sie z. B. in der DE-OS 43 08 282 beschrieben werden, haben sich als günstig herausgestellt. Bevorzugt werden Emulsionen. O/W-Emulsionen werden besonders bevorzugt. Emulsionen, W/O-Emulsionen und O/W-Emulsionen sind in üblicher Weise erhältlich.

Weitere Ausführungsformen stellen ölige Lotionen auf Basis von natürlichen oder synthetischen Ölen und Wachsen, Lanolin, Fettsäureestern, insbesondere Triglyceriden von Fettsäuren, oder ölig-alkoholische Lotionen auf Basis eines Niedrigalkohols, wie Ethanol, oder eines Glycerols, wie Propylenglykol, und/oder eines Polyols, wie Glycerin, und Ölen, Wachsen und Fettsäureestern, wie Triglyceriden von Fettsäuren, dar.

Feste Stifte bestehen aus natürlichen oder synthetischen Wachsen und Ölen, Fettalkoholen, Fettsäuren, Fettsäureestern, Lanolin und anderen Fettkörpern.

Ist eine Zubereitung als Aerosol konfektioniert, verwendet man in der Regel die üblichen Treibmittel, wie Alkane, Fluoralkane und Chlorfluoralkane.

Die kosmetische Zubereitung kann auch zum Schutz der Haare gegen photochemische Schäden verwendet werden, um Veränderungen von Farbnuancen, ein Entfärben oder Schäden mechanischer Art zu verhindern. In diesem Fall erfolgt geeignet eine Konfektionierung als Shampoo, Lotion, Gel oder Emulsion zum Ausspülen, wobei die jeweilige Zubereitung vor oder nach dem Shamponieren, vor oder nach dem Färben oder Entfärben bzw. vor oder nach der Dauerwelle aufgetragen wird. Es kann auch eine Zubereitung als Lotion oder Gel zum Frisieren und Behandeln, als Lotion oder Gel zum Bürsten oder Legen einer Wasserwelle, als Haarlack, Dauerwellenmittel, Färbe- oder Entfärbemittel der Haare gewählt werden. Die Zubereitung mit Lichtschutzeigenschaften kann Adjuvantien enthalten, wie Grenzflächen aktive Mittel, Verdickungsmittel, Polymere, weichmachende Mittel, Konservierungsmittel, Schaumstabilisatoren, Elektrolyte, organische Lösungsmittel, Silikonderivate, Öle, Wachse, Antifettmittel, Farbstoffe und/oder Pigmente, die das Mittel selbst oder die Haare färben oder andere für die Haarpflege üblicherweise verwendete Ingredienzien.

Gegenstand der Erfindung ist somit auch die Verwendung der Effektpigmente in Formulierungen wie Farben, Lacken, Automobillacken, Pulverlacken, Druckfarben, Sicherheitsdruckfarben, Kunststoffen, keramischen Materialien, Gläsern, Papier, im Papierstrich, in Tonern für elektrophotographische Druckverfahren, im Saatgut, in Gewächshausfolien und Zeltplanen, als - Absorber bei der Lasermarkierung von Papier und Kunststoffen, als Absorber beim Laserschweißen von Kunststoffen, kosmetischen Formulierungen, zur Herstellung von Pigmentanteigungen mit Wasser, organischen und/oder wässrigen Lösemitteln, zur Herstellung von Pigmentpräparationen und Trockenpräparaten, wie z. B. Granulaten.

Die nachfolgenden Beispiele sollen die Erfindung näher erläutern ohne sie jedoch zu beschränken.

### Beispiele

### I. Herstellung der Pigmente

### Beispiel 1: Natürlicher Glimmer + TiO₂ + FeOOH + SiO₂

200 g natürlicher Kaliglimmer der Fraktion 10 - 60 µm werden mit VE-Wasser auf eine Konzentration von 100 g/l aufgefüllt. Die Suspension wird auf 80 °C erwärmt. Anschließend wird mit Salzsäure (15 % HCl) der pH auf 1,8 eingestellt. Bei konstantem pH-Wert werden ca. 30 ml einer TiOCl₂-Lösung (400 g/l) zudosiert und dabei mit einer 32 w/w-%igen NaOH gegentitriert. Nach beendetem Zudosieren wird 10 min nachgerührt. Anschließend wird mit NaOH ein pH-Wert von 4,0 eingestellt. Durch Zudosieren einer FeCl₃-Lösung (14,25 % Fe) wird dann bei konstantem pH-Wert eine FeOOH-Schicht bis zu einer gold-grünen Farbe aufgefällt und 30 min nachgerührt.

Der pH-Wert wird anschließend mit verdünnter Natronlauge auf pH 9,0 eingestellt. Innerhalb von 2 Stunden werden 100 ml einer Natriumwasserglaslösung mit einem Kieselsäuregehalt von 5 % zugegeben, wobei der pH-Wert mittels 2,5 %-iger Schwefelsäure konstant gehalten wird. Anschließend wird 30 Minuten nachgerührt und dann der pH-Wert mit Schwefelsäure innerhalb von 30 Minuten auf 7,5 gestellt. Nach einer Nachrührzeit von 30 Minuten wird das nachbeschichtete Pigment durch Filtration von der überstehenden Reaktionslösung abgetrennt und salzfrei gewaschen. Das Pigment wird bei 110 °C getrocknet und entsprechend der gewünschten Korngröße gesiebt.

Das so erhaltene erfindungsgemäße Pigment zeigt eine hellgrüne Interferenzmit gold-ockerfarbener Körperfarbe. Es enthält eine Beschichtung von Siliziumdioxid mit einer Schichtdicke von ca. 20-35 nm.

### Beispiel 2: Synthetischer Glimmer + Fe₂O₃ + 5% SiO₂/2,5% Al₂O₃ (2 : 1)

75 g synthetische Glimmerplättchen der Teilchengröße10 - 50 µm werden in 1,5 I VE-Wasser unter Rühren auf 75 °C erhitzt.

Nun wird mit 5 %-iger Salzsäure der pH-Wert der Suspension auf 3,0 eingestellt. Anschließend wird eine 3 Gew.%-ige (bezogen auf Fe³⁺-Gehalt) Eisenchloridlösung zudosiert, wobei der pH-Wert durch gleichzeitiges Zutropfen einer 32 %igen Natronlauge konstant gehalten wird. Durch Farbmessung während des Prozesses wird die Koloristik während der Herstellung des Pigments kontrolliert und der Fällungsprozess nach dem Buntton (Bunttonwinkel arc tan b*/a*) gesteuert. Mit zunehmender Schichtdicke des so gefällten Eisenhydroxyoxides werden bronzefarbige, orangerote, rotbraune, bis rotviolette Farbtöne durchlaufen.
Nach Erreichen des gewünschten Endpunktes wird 15 Minuten nachgerührt. Die erhaltene Pigmentsuspension wird mit 32 % NaOH auf pH 9 eingestellt. Nach Zugabe der Natronwasserglaslösung mit einem Kieselsäuregehalt von 5% (im Verhältnis 1 : 1 mit Wasser verdünnt; 39 ml in 1000 ml Wasser) innerhalb 2 h wird 15 Minuten gerührt und der pH mit konz. HCl auf pH 6,5 eingestellt. Nach 15 Minuten Rühren werden 5,33 g AlCl₃ x 6 H₂O und 3,20 g Natriumsulfat in fester Form zugegeben. Die erhaltene Suspension wird 1 h bei 90 °C gerührt. Anschließend wird die wässrige Lösung abgesaugt, chloridfrei gewaschen und das Produkt getrocknet. Das Produkt wird 30 Minuten bei 700 °C geglüht.

Das so erhaltene erfindungsgemäße Pigment enthält eine Beschichtung von Siliziumoxid/Aluminiumoxid mit einer Schichtdicke von ca. 30 nm.

### Beispiel 3: Natürlicher Glimmer + Fe₂O₃ + SiO₂ (dotiert mit K⁺)

75 g Glimmerplättchen (natürlich) der Teilchengröße 10 - 50 µm werden in 1,5 I VE-Wasser unter Rühren auf 75 °C erhitzt. Nun wird mit konz. Salzsäure der pH-Wert der Suspension auf 3,0 eingestellt.
Es folgt die Zudosierung einer 5 Gew.%-igen (bezogen auf Fe³⁺-Gehalt) Eisenchloridlösung, wobei der pH-Wert durch gleichzeitiges Zutropfen einer 32 %igen Natronlauge konstant gehalten wird. Durch Farbmessung während des Prozesses wird die Koloristik während der Herstellung des Pigments kontrolliert und der Fällungsprozess nach dem Buntton (Bunttonwinkel arc tan b*/a*) gesteuert. Mit zunehmender Schichtdicke des gefällten Eisenhydroxyoxides werden bronzefarbige, orangerote, rotbraune, bis rotviolette Farbtöne durchlaufen.
Nach Erreichen des gewünschten Endpunktes wird 15 Minuten nachgerührt.

Der pH-Wert wird mit verdünnter Kalilauge auf pH 9,0 eingestellt. Innerhalb von 2 Stunden werden 100 ml einer Kaliumwasserglaslösung mit einem Kieselsäuregehalt von 5 % zugegeben, wobei der pH-Wert mittels 2,5 %iger Schwefelsäure konstant gehalten wird. Anschließend wird 30 Minuten nachgerührt und dann der pH-Wert mit Schwefelsäure innerhalb von 30 Minuten auf 7,5 gestellt. Nach einer Nachrührzeit von 30 Minuten wird das nachbeschichtete Pigment durch Filtration von der überstehenden Reaktionslösung abgetrennt und gewaschen. Nach Trocknung bei 100 bis 150 °C wird das Pigment 45 Minuten bei 700 °C calciniert.

Das so erhaltene Pigment enthält eine Beschichtung von Siliziumdioxid mit einer Schichtdicke von ca. 20 - 30 nm.

### Beispiel 4: Natürlicher Glimmer + Fe₂O₃ + SiO₂ (Variation der SiO₂-Menge bezogen auf das Basispigment)

### Beispiel 4a: Natürlicher Glimmer + Fe₂O₃ (Vergleich)

Die Beschichtung des Glimmers mit Fe₂O₃ erfolgt analog Beispiel 3 bis zum gewünschten Farbendpunkt im Bronze-Bereich. Man rührt 30 Minuten nach, und anschließend wird das beschichtete Substrat durch Filtration vom Überstand abgetrennt und gewaschen. Das Pigment-Vorprodukt wird anschließend bei 150 °C getrocknet und 45 Minuten bei 700 °C calciniert. Das resultierende Pigment dient als Vergleich ohne Nachbeschichtung und wird für weitere Nachbeschichtungen direkt für die Beispiele 4b und 4c eingesetzt.

### Beispiel 4b: bronzefarbenes Fe₂O₃-Pigment gemäß Beispiel 4a + 15 % SiO₂

200 g geglühtes, bronzefarbenes Pigment der Teilchengröße 10 - 60 µm hergestellt analog Beispiel 4a, werden in 2,4 I VE-Wasser re-suspendiert und unter Rühren auf 70 °C erhitzt. Der pH-Wert wird mit verdünnter Natronauge auf pH 9,0 eingestellt.
Innerhalb von 3 Stunden werden 383 g einer Natriumwasserglaslösung mit einem SiO₂-Gehalt von 8 % zudosiert, wobei der pH-Wert mittels 10 %iger Salzsäure konstant gehalten wird. Anschließend wird 30 Minuten nachgerührt und dann der pH-Wert mit Salzsäure innerhalb von 30 Minuten auf 5 gestellt. Nach einer Nachrührzeit von 30 Minuten wird das nachbeschichtete Pigment durch Filtration von der überstehenden Reaktionslösung abgetrennt und salzfrei gewaschen. Das Pigment wird bei 150 °C getrocknet und 45 Minuten bei 700 °C calciniert.
Das so erhaltene erfindungsgemäße Pigment ist bronzefarben.

### Beispiel 4c: bronzefarbenes Fe₂O₃-Pigment gemäß Beispiel 4a + 30 % SiO₂

200 g geglühtes, bronzefarbenes Pigment der Teilchengröße 10 - 60 µm hergestellt analog Beispiel 4a, werden in 2,4 l VE-Wasser re-suspendiert und unter Rühren auf 70 °C erhitzt. Der pH-Wert wird mit verdünnter Natronauge auf pH 9,0 eingestellt.
Innerhalb von 7 Stunden werden 766 g einer Natriumwasserglaslösung mit einem SiO₂-Gehalt von 8 % zudosiert, wobei der pH-Wert mittels 10 %iger Salzsäure konstant gehalten wird. Anschließend wird 30 Minuten nachgerührt und dann der pH-Wert mit Salzsäure innerhalb von 30 Minuten auf 5 gestellt. Nach einer Nachrührzeit von 30 Minuten wird das nachbeschichtete Pigment durch Filtration von der überstehenden Reaktionslösung abgetrennt und salzfrei gewaschen. Das Pigment wird bei 150 °C getrocknet und 45 Minuten bei 700 °C calciniert.

Das so erhaltene erfindungsgemäße Pigment ist bronzefarben.

### II. Quantitative Bestimmung der Pigmentreaktivität gegenüber DHA in Selbstbräunungsformulierungen

Für Vergleichsversuche werden je 5 % Dihydroxyaceton und jeweils 5 % Pigment aus den Beispielen 4, 4a und 4b in eine O/W Creme und in eine wässrige Lösung eingearbeitet. (Vergleich: nur mit Dihydroxyaceton)

### Creme-Formulierung (Phase A):

| **Rohstoffe** | **INCI** | **Gew. [%]** |
|---|---|---|
| Tego Care 150 | Glyceryl Stearate, Steareth-26, Ceteth-20, Stearyl Alcohol | 8,00 |
| Lanette O | Cetearyl Alcohol | 1,50 |
| Tegosoft Liquid | Cetearyl Ethylhexanoate | 5,00 |
| Miglyol 812 N | Caprylic/Capric Triglyceride | 5,00 |
| Abil-Wax 2434 | Stearoxy Dimethicone | 1,00 |
| Dow Corning 200 (100cs) | Dimethicone | 0,50 |
| Propyl-4-hydroxybenzoat | Propylparaben | 0,05 |

### Creme-Formulierung (Phase B):

| **Rohstoffe** | **INCl** | **Gew. [%]** |
|---|---|---|
| Pigment aus Beispiel 4, 4a oder 4b | | 5,00 |
| 1,2-Propandiol | Propylene glycol | 3,00 |
| Methyl-4-hydroxybenzoat | Methlyparaben | 0,15 |
| Wasser, demineralisiert | Aqua (Water) | 55,80 |

### Creme-Formulierung (Phase C):

| **Rohstoffe** | **INCI** | **Gew. [%]** |
|---|---|---|
| Dihydroxyaceton | Dihydrocyacetone | 5,00 |
| Wasser, demineralisiert | Aqua (Water) | 10,00 |

### Herstellung:

Phase A und B auf 75-80°C erhitzen. Phase B schnell in Phase A geben. Homogenisieren.
Unter Rühren abkühlen und bei 40 °C Phase C zugeben.
• Die Proben werden bei Raumtemperatur und bei 40°C für 3 Monate unter Lichtausschluß eingelagert.
• Enzymatische DHA Bestimmung erfolgt nach Herstellung (Anfangswert) und nach 3 Monaten
• Anforderung für stabile DHA Formulierungen: DHA -Abbau maximal 20 %

### Ergebnis:

| | | | |
|---|---|---|---|
| | | | |

| **Proben** | **Anfangswerte** | **nach 3 Monaten bei 40 °C** | **Abbau DHA in %** |
|---|---|---|---|
| Pigment aus Bsp. 4a (mit 0 % SiO₂), + 5 % DHA | 5,0 | 1,6 | 68,0 |
| Pigment aus Bsp. 4b (mit 15 % SiO₂), + 5 % DHA | 4,9 | 4,3 | 12,2 |
| Pigment aus Bsp. 4c (mit 30 % SiO₂), + 5 % DHA | 5,1 | 5,1 | 0 |
| 5 % DHA | 4,8 | 4,3 | 10,4 |

### III. Anwendungsbeispiele:

### Anwendungsbeispiel 1: Pflegende Selbstbräunungscreme (O/W)

| **Inhaltsstoffe** | | **INCI** | **[%]** |
|---|---|---|---|
| | | | |
| **Phase A** | | | |
| Montanov 68 | (1) | Cetearyl Alcohol, Cetearyl Glucoside | 4,00 |
| Span 60 | (2) | Sorbitan Stearate | 1,50 |
| Lanette O | (3) | Cetearyl Alcohol | 1,00 |
| Cosmacol ELI | (4) | C12-13 Alkyl Lactate | 3,00 |
| Cosmacol EMI | (4) | Dl-C12-13 Alkyl Malate | 1,50 |
| Arlamol HD | (2) | Isohexadecane | 3,00 |
| Dow Corning 9040 Silicone Elastomer Blend | (5) | Cyclomethicone, Dimethicone Crosspolymer | 1,00 |
| RonaCare^{®} Tocopherol Acetate | (6) | Tocopheryl Acetate | 0,50 |
| Propyl-4-hydroxybenzoate | (6) | Propylparaben | 0,05 |
| **Phase B** | | | |
| RonaCare^{®} Ectoin | (6) | Ectoin | 0,50 |
| Pigment aus Beispiel 4b | | | 2,00 |
| Glycerol, anhydrous | (6) | Glycerin | 2,00 |
| FD&C Yellow No. 6 W082 | (8) | Cl 15985 | 0,01 |
| Methyl-4-hydroxybenzoate | (6) | Methylparaben | 0,15 |
| Water, demineralized | | Aqua (Water) | 64,09 |
| **Phase C** | | | |
| Sepigel 305 | (1) | Laureth-7, Polyacrylamide, C13-14 Isoparaffin | 0,50 |
| **Phase D** | | | |
| Dihydroxyacetone | (6) | Dihydroxyacetone | 5,00 |
| Water, demineralized | | Aqua (Water) | 10,00 |
| **Phase E** | | | |
| Fragrance Babylon | (9) | Parfum | 0,20 |

### Herstellung:

Phase A und B werden separat auf 75 °C erwärmt. Dann wird zu Phase A langsam Phase B unter Rühren zugemischt. Bei 60 °C wird Phase C zu der Phase A/B mit einem Handrührer zugemischt und homogenisiert. Auf 40 °C abkühlen lassen und die Phase D und Phase E unterrühren.

### Bemerkungen:

pH_{23°C} = 4,0
Viskosität: 18,600 cps (Brookfield model RVT DV-II, Helipath Spindle C, 10 rpm) bei 23 °C

### Bezugsquellen:

(1) Seppic
(2) Uniqema
(3) Cognis GmbH
(4) Condea Chimica D.A.C. S.p.A.
(5) Dow Corning
(6) Merck KGaA/Rona^{®}
(7) D.D.Williamson
(8) Les Colorants Wackherr SA
(9) Drom

### Anwendungsbeispiel 2: Selbstbräunungscreme (O/W)

| **Inhaltsstoffe** | | **INCl** | **[%]** |
|---|---|---|---|
| | | | |
| **Phase A** | | | |
| Tego Care 150 | (1) | Glyceryl Stearate, Steareth-26, Ceteth-20, Stearyl Alcohol | 8,00 |
| Paraffin liquid | (2) | Parffinum Liquidum (Mineral Oil) | 12,00 |
| Paraffin schüttfähig | (2) | Paraffin | 2,00 |
| Miglyol 812 N | (3) | Caprylic/Capric Triglyceride | 3,00 |
| Isopropyl myristate | (4) | Isopropyl Myristate | 2,00 |
| Propyl-4-hydroxybenzoate | (2) | Propylparaben | 0,15 |
| | | | |
| **Phase B** | | | |
| 1,2-Propandiol | (2) | Propylene Glycol | 4,00 |
| Sorbitol F liquid | (2) | Sorbitol | 2,00 |
| Water, demineralized | | Aqua (Water) | 47,40 |
| Methyl-4-hydroxybenzoate | (2) | Methylparaben | 0,15 |
| Pigment aus Beispiel 1 | | | 2,00 |
| **Phase C** | | | |
| Dihydroxyacetone | (2) | Dihydroxyacetone | 5,00 |
| Water, demineralized | | Aqua (Water) | 11,80 |
| | | | |
| **Phase D** | | | |
| Fragrance (q.s.) | | Parfum | 0,50 |

### Herstellung:

Phase A wird auf 80 °C erwärmt und Phase B auf 75 °C. Dann wird Phase A unter Rühren langsam zu Phase B gegeben. Mit einem Handrührer wird die Mischung bei 65 °C für eine Minute homogenisiert. Auf 40 °C abkühlen lassen und die Phase C unterrühren. Weiter auf 35 °C abkühlen und Phase D unter Rühren untermischen.

### Bemerkungen:

pH_{23°C} = 4,6
Viskosität: 42,500 mPas (Brookfield RVT, Sp. C, 10 rpm) bei 23 °C

### Bezugsguellen:

(1) Degussa-Goldschmidt AG
(2) Merck KGaA/Rona^{®}
(3) Sasol Germany GmbH
(4) Cognis GmbH

### Anwendungsbeispiele 3-14: Selbstbräunungscreme (O/W)

| | | | | | | | | | | | | | |
|---|---|---|---|---|---|---|---|---|---|---|---|---|---|
| **Inhaltsstoffe** | **INCI** | **3** | 4 | **5** | **6** | **7** | **8** | **9** | **10** | **11** | **12** | **13** | **14** |
| | | | | | | | | | | | | | |
| **Phase A** | | | | | | | | | | | | | |
| Tego Care 150 | Glyceryl Stearate, Steareth-26, Ceteth-20, Stearyl Alcohol | 8,00 | 8,00 | 8,00 | 8,00 | 8,00 | 8,00 | 8,00 | 8,00 | 8,00 | 8,00 | 8,00 | 8,00 |
| Lanette O | Cetearyl Alcohol | 1,50 | 1,50 | 1,50 | 1,50 | 1,50 | 1,50 | 1,50 | 1,50 | 1,50 | 1,50 | 1,50 | 1,50 |
| Tegosoft Liquid | Cetearyl Ethylhexanoate | 6,50 | 5,50 | 5,50 | 5,50 | 5,50 | 5,50 | 5,50 | 6,50 | 5,50 | 5,50 | 5,50 | 5,50 |
| Miglyol 812 N | Caprylic/Capric Triglyceride | 6,50 | 5,50 | 5,50 | 5,50 | 5,50 | 5,50 | 5,50 | 6,50 | 5,50 | 5,50 | 5,50 | 5,50 |
| Abil-Wax 2434 | Stearoxy Dimethicone | 1,20 | 1,00 | 1,00 | 1,00 | 1,00 | 1,00 | 1,00 | 1,20 | 1,00 | 1,00 | 1,00 | 1,00 |
| Dow Corning 200 (100cs) | Dimethicone | 0,50 | 0,50 | 0,50 | 0,50 | 0,50 | 0,50 | 0,50 | 0,50 | 0,50 | 0,50 | 0,50 | 0,50 |
| RonaCare^{®} Tocopherolacetate | Tocopheryl Acetate | | 0,50 | 0,50 | 0,50 | 0,50 | 0,50 | 0,50 | | 0,50 | 0,50 | 0,50 | 0,50 |
| Propyl-4-hydroxybenzoate | Propylparaben | 0,05 | 0,05 | 0,05 | 0,05 | 0,05 | 0,05 | 0,05 | 0,05 | 0,05 | 0,05 | 0,05 | 0,05 |
| | | | | | | | | | | | | | |
| **Phase B** | | | | | | | | | | | | | |
| RonaCare^{®} Ection | Ectoin | 0,30 | 0,30 | 0,30 | 0,30 | 0,30 | 0,30 | 0,30 | 0,30 | 0,30 | 0,30 | 0,30 | 0,30 |
| 1,2-Propandiol | Propylene Glycol | 3,00 | 3,00 | 3,00 | 3,00 | 3,00 | 3,00 | 3,00 | 3,00 | 3,00 | 3,00 | 3,00 | 3,00 |
| Methyl-4-hydroxybenzoate | Methylparaben | 0,15 | 0,15 | 0,15 | 0,15 | 0,15 | 0,15 | 0,15 | 0,15 | 0,15 | 0,15 | 0,15 | 0,15 |
| Water, demineralized | Aqua (Water) | 60,20 | 59,90 | 53,90 | 61,40 | 58,90 | 51,40 | 61,40 | 57,20 | 51,40 | 60,90 | 57,90 | 48,90 |
| | | | | | | | | | | | | | |
| **Phase C** | | | | | | | | | | | | | |
| Dihydroxyacetone | Dihydroxyacetone | 1,00 | 2,00 | 5,00 | 1,00 | 2,00 | 5,00 | 1,00 | 2,00 | 5,00 | 1,00 | 2,00 | 5,00 |
| Trihydroxyethylrutine | Troxerutin | | | | 0,50 | 1,00 | 2,50 | | | | 0,50 | 1,00 | 2,50 |
| Pigment aus Beispiel 2 | | 1,00 | 2,00 | 5,00 | 1,00 | 2,00 | 5,00 | 1,00 | 2,00 | 5,00 | 1,00 | 2,00 | 5,00 |
| Erythrulose | Erythrulose | | | | | | | 0,50 | 1,00 | 2,50 | 0,50 | 1,00 | 2,50 |
| Water, demineralized | Aqua (Water) | 10,00 | 10,00 | 10,00 | 10,00 | 10,00 | 10,00 | 10,00 | 10,00 | 10,00 | 10,00 | 10,00 | 10,00 |
| | | | | | | | | | | | | | |
| **Phase D** | | | | | | | | | | | | | |
| Fragrance Sunshine | Parfum | 0,10 | 0,10 | 0,10 | 0,10 | 0,10 | 0,10 | 0,10 | 0,10 | 0,10 | 0,10 | 0,10 | 0,10 |

### Herstellung:

Phase A wird auf 80 °C und Phase B wird auf 80 °C erwärmt. Dann wird Phase B unter Rühren langsam zu Phase A gegeben. Die Mischung wird homogenisiert. Auf 40 °C abkühlen lassen und die Phase C unterrühren. Phase D unter Rühren untermischen.

### Anwendungsbeispiele 15-26: Selbstbräunungslotion (W/O)

| **Inhaltsstoffe INCI** | | **15** | **16** | **17** | **18** | **19** | **20** | **21** | **22** | **23** | **24** | **25** | **26** |
|---|---|---|---|---|---|---|---|---|---|---|---|---|---|
| | | | | | | | | | | | | | |
| **Phase A** | | | | | | | | | | | | | |
| Abil EM 97 | Bis-PEG/PPG-14/14, Dimethicone, Cyclopentasiloxane, Cetyl PEG/PPG-10/1 | 1,50 | 1,50 | 1,50 | 1,50 | 1,50 | 1,50 | 1,50 | 1,50 | 1,50 | 1,50 | 1,50 | 1,50 |
| Abil EM 90 | Dimethicone | 1,30 | 1,30 | 1,30 | 1,30 | 1,30 | 1,30 | 1,30 | 1,30 | 1,30 | 1,30 | 1,30 | 1,30 |
| Dow Corning 345 | Cyclomethicone | 13,00 | 13,00 | 13,00 | 13,00 | 13,00 | 13,00 | 13,00 | 13,00 | 13,00 | 13,00 | 13,00 | 13,00 |
| Ceraphyl 368 | Ethylhexyl Palmitate | 2,00 | 2,00 | 2,00 | 2,00 | 2,00 | 2,00 | 2,00 | 2,00 | 2,00 | 2,00 | 2,00 | 2,00 |
| SFE 839 | Cyclopentasiloxane, Dimethicone/Vinyldimethicone Crosspolymer | 5,00 | 5,00 | 5,00 | 5,00 | 5,00 | 5,00 | 5,00 | 5,00 | 5,00 | 5,00 | 5,00 | 5,00 |
| Tegosoft DEC | Diethylhexyl Carbonate | 5,00 | 5,00 | 5,00 | 5,00 | 5,00 | 5,00 | 5,00 | 5,00 | 5,00 | 5,00 | 5,00 | 5,00 |
| Fragance Babylon | Parfum | 0,30 | 0,30 | 0,30 | 0,30 | 0,30 | 0,30 | 0,30 | 0,30 | 0,30 | 0,30 | 0,30 | 0,30 |
| | | | | | | | | | | | | | |
| **Phase B** | | | | | | | | | | | | | |
| Dihydroxyacetone | Dihydroxyacetone | 1,00 | 2,00 | 5,00 | 1,00 | 2,00 | 5,00 | 1,00 | 2,00 | 5,00 | 1,00 | 2,00 | 5,00 |
| Trihydroxyethylrutine | Troxerutin | | | | 0,50 | 1,00 | 2,50 | 2,00 | | | | | |
| Pigment nach Beispiel 3 | | 1,00 | 2,00 | 5,00 | 1,00 | 2,00 | 5,00 | 1,00 | 2,00 | 5,00 | 1,00 | 2,00 | 5,00 |
| Erythrulose | Erythrulose | | | | | | | 0,50 | 1,00 | 2,50 | 0,50 | 1,00 | 2,50 |
| RonaCare^{®} Ection | Ectoin | 0,30 | 0,30 | 0,30 | 0,30 | 0,30 | 0,30 | 0,30 | 0,30 | 0,30 | 0,30 | 0,30 | 0,30 |
| 1,2-Propandiol | Propylene Glycol | 18,00 | 18,00 | 18,00 | 18,00 | 18,00 | 18,00 | 18,00 | 18,00 | 17,00 | 17,00 | 17,00 | 17,00 |
| Glycerol, anhydrous | Glycerin | 3,00 | 3,00 | 3,00 | 3,00 | 3,00 | 3,00 | 3,00 | 3,00 | 3,00 | 3,00 | 3,00 | 3,00 |
| Magnesium sulfate heptahydrate | Magnesium Sulfate | 2,00 | 2,00 | 2,00 | 2,00 | 2,00 | 2,00 | 2,00 | 2,00 | 2,00 | 2,00 | 2,00 | 2,00 |
| Ethanol 96 % | Alcohol | 8,00 | 8,00 | 8,00 | 8,00 | 8,00 | 8,00 | 8,00 | 8,00 | 8,00 | 8,00 | 8,00 | 8,00 |
| Phenonip | Phenoxyethanol, Butylparaben, Ethylparaben, Methylparaben | 1,00 | 1,00 | 1,00 | 1,00 | 1,00 | 1,00 | 1,00 | 1,00 | 1,00 | 1,00 | 1,00 | 1,00 |
| Water, demineralized | Aqua (Water) | 37,60 | 35,60 | 29,60 | 37,10 | 34,60 | 27,10 | 37,10 | 34,60 | 28,10 | 37,60 | 34,60 | 25,60 |

### Herstellung:

Magnesiumsulfat-Heptahydrate im Wasser der Phase B lösen. Zugabe der restlichen Inhaltsstoffe von Phase B. Phase B langsam unter Rühren mit einem Handmixer zu Phase A geben. 2 Minuten schnell Rühen und 2 Minuten homogenisieren.

### Anwendungsbeispiele 27-38: Hydrogel

| | | | | | | | | | | | | | |
|---|---|---|---|---|---|---|---|---|---|---|---|---|---|
| **Inhaltsstoffe** | **INCI** | **27** | **28** | **29** | **30** | **31** | **32** | **33** | **34** | **35** | **36** | **37** | **38** |
| | | | | | | | | | | | | | |
| **Phase A** | | | | | | | | | | | | | |
| Dihydroxyacetone | Dihydroxyacetone | 1,00 | 2,00 | 5,00 | 1,00 | 2,00 | 5,00 | 1,00 | 2,00 | 5,00 | 1,00 | 2,00 | 5,00 |
| Trihydroxyethylrutine | Troxerutin | | | | 0,50 | 1,00 | 2,50 | | | | 0,50 | 1,00 | 2,50 |
| Pigment nach Beispiel 4b | | 1,00 | 2,00 | 5,00 | 1,00 | 2,00 | 5,00 | 1,00 | 2,00 | 5,00 | 1,00 | 2,00 | 5,00 |
| Erythrulose | Erythrulose | | | | | | | 0,50 | 1,00 | 2,50 | 0,50 | 1,00 | 2,50 |
| RonaCare^{®} Ection | Ectoin | 0,30 | 0,30 | 0,30 | 0,30 | 0,30 | 0,30 | 0,30 | 0,30 | 0,30 | 0,30 | 0,30 | 0,30 |
| 1,2-Propandiol | Propylene Glycol | 2,50 | 2,50 | 2,50 | 2,50 | 2,50 | 2,50 | 2,50 | 2,50 | 2,50 | 2,50 | 2,50 | 2,50 |
| Sorbitol F liquid | Sorbitol | 2,50 | 2,50 | 2,50 | 2,50 | 2,50 | 2,50 | 2,50 | 2,50 | 2,50 | 2,50 | 2,50 | 2,50 |
| Methyl-4-hydroxybenzoate | Methylparaben | 0,20 | 0,20 | 0,20 | 0,20 | 0,20 | 0,20 | 0,20 | 0,20 | 0,20 | 0,20 | 0,20 | 0,20 |
| Water, demineralized | Aqua (Water) | 31,00 | 29,00 | 23,00 | 30,50 | 28,00 | 20,50 | 30,50 | 28,00 | 20,50 | 30,00 | 27,00 | 18,00 |
| | | | | | | | | | | | | | |
| **Phase B** | | | | | | | | | | | | | |
| Water, demineralized | Aqua (Water) | 60,00 | 60,00 | 60,00 | 60,00 | 60,00 | 60,00 | 60,00 | 60,00 | 60,00 | 60,00 | 60,00 | 60,00 |
| Natrosol 250 HHR | Hydroxyethylcellulose | 1,50 | 1,50 | 1,50 | 1,50 | 1,50 | 1,50 | 1,50 | 1,50 | 1,50 | 1,50 | 1,50 | 1,50 |

### Herstellung:

### Natrosol zu Phase B zugeben und homogenisieren.

### Anwendungsbeispiele 39-46: Shower lotion

| | | | | | | | | | |
|---|---|---|---|---|---|---|---|---|---|
| **Inhaltsstoffe** | **INCI** | **39** | **40** | **41** | **42** | **43** | **44** | **45** | **46** |
| | | | | | | | | | |
| **Phase A** | | | | | | | | | |
| Dihydroxyacetone | Dihydroxyacetone | 8,00 | 10,00 | 8,00 | 10,00 | 8,00 | 10,00 | 8,00 | 10,00 |
| Trihydroxyethylrutine | Troxerutin | | | 2,00 | 3,00 | 2,00 | 3,00 | | |
| Pigment nach Beispiel 1 | | 3,00 | 5,00 | 3,00 | 5,00 | 3,00 | 5,00 | 3,00 | 5,00 |
| Erythrulose | Erythrulose | | | | | 3,00 | 5,00 | 3,00 | 5,00 |
| RonaCare^{®} Ection | Ectoin | 0,50 | 0,50 | 0,50 | 0,50 | 0,50 | 0,50 | 0,50 | 0,50 |
| 1,2-Propandiol | Propylene Glycol | 4,50 | 4,50 | 4,50 | 4,50 | 4,50 | 4,50 | 4,50 | 4,50 |
| Glycerol, anhydrous | Glycerin | 4,00 | 4,00 | 4,00 | 4,00 | 4,00 | 4,00 | 4,00 | 4,00 |
| Transcutol CG | Ethoxydiglycol | 3,00 | 3,00 | 3,00 | 3,00 | 3,00 | 3,00 | 3,00 | 3,00 |
| Arlasolve DMI | Dimethyl Isosorbide | 2,00 | 2,00 | 2,00 | 2,00 | 2,00 | 2,00 | 2,00 | 2,00 |
| Tween 80 | Polysorbate 80 | 0,50 | 0,50 | 0,50 | 0,50 | 0,50 | 0,50 | 0,50 | 0,50 |
| Walnut extract | Glycol | 1,50 | 1,50 | 1,50 | 1,50 | 1,50 | 1,50 | 1,50 | 1,50 |
| Caramel 050 | Caramel | 0,10 | 0,10 | 0,10 | 0,10 | 0,10 | 0,10 | 0,10 | 0,10 |
| Frangrance Sunshine | Parfum | 0,30 | 0,30 | 0,30 | 0,30 | 0,30 | 0,30 | 0,30 | 0,30 |
| Phenonip | Phenoxyethanol, Butylparaben, Ethylparaben, Propylparaben, Methylparaben | 0,80 | 0,80 | 0,80 | 0,80 | 0,80 | 0,80 | 0,80 | 0,80 |
| Water, demineralized | Aqua (Water) | 73,00 | 69,80 | 69,80 | 71,00 | 66,80 | 70,80 | 71,80 | 71,80 |

### Herstellung:

Alle Inhaltstoffe unter Rühren homogenisieren.

### Anwendungsbeispiele 47-54: Shower lotion

| **Inhaltsstoffe** | **INCI** | **47** | **48** | **49** | **50** | **51** | **52** | **53** | **54** |
|---|---|---|---|---|---|---|---|---|---|
| | | | | | | | | | |
| **Phase A** | | | | | | | | | |
| Dihydroxyacetone | Dihydroxyacetone | 8,00 | 10,00 | 8,00 | 10,00 | 8,00 | 10,00 | 8,00 | 10,00 |
| Trihydroxyethylrutine | Troxerutin | | | 2,00 | 3,00 | 2,00 | 3,00 | | |
| Pigment nach Beispiel 1 | | 3,00 | 5,00 | 3,00 | 5,00 | 3,00 | 5,00 | 3,00 | 5,00 |
| Erythrulose | Erythrulose | | | | | 3,00 | 5,00 | 3,00 | 5,00 |
| RonaCare^{®} Ection | Ectoin | 0,50 | 0,50 | 0,50 | 0,50 | 0,50 | 0,50 | 0,50 | 0,50 |
| 1,2-Propandiol | Propylene Glycol | 6,00 | 6,00 | 6,00 | 6,00 | 6,00 | 6,00 | 6,00 | 6,00 |
| Transcutol CG | Ethoxydiglycol | 5,00 | 5,00 | 5,00 | 5,00 | 5,00 | 5,00 | 5,00 | 5,00 |
| Glycerol, anhydrous | Glycerin | 4,00 | 4,00 | 4,00 | 4,00 | 4,00 | 4,00 | 4,00 | 4,00 |
| Arlasolve DMI | Dimethyl Isosorbide | 2,00 | 2,00 | 2,00 | 2,00 | 2,00 | 2,00 | 2,00 | 2,00 |
| Tween 80 | Polysorbate 80 | 1,60 | 1,60 | 1,60 | 1,60 | 1,60 | 1,60 | 1,60 | 1,60 |
| Aloe CON UP 10 COS. | Aloe Barbadensis | 0,30 | 0,30 | 0,30 | 0,30 | 0,30 | 0,30 | 0,30 | 0,30 |
| Colorants | Colorants | q.s. | q.s. | q.s. | q.s. | q.s. | q.s. | q.s. | q.s. |
| Preservative | Preservative | q.s. | q.s. | q.s. | q.s. | q.s. | q.s. | q.s. | q.s. |
| Water, demineralized | Aqua (Water) | 69,60 | 65,60 | 67,60 | 62,60 | 64,60 | 57,60 | 66,60 | 60,60 |

## Patentansprüche

1. Effektpigmente auf der Basis von plättchenförmigen Substraten oder mit ein oder mehreren Metalloxiden beschichtete plättchenförmige Substrate, **dadurch gekennzeichnet, dass** sie als finale Schicht ein Schichtpaket aus
(A) einer Schicht aus Eisenoxid und/oder Eisenoxohydrat, und
(B) einer Schicht aus SiO₂ und/oder Al₂O₃ bzw. deren Hydrate
oder ein Schichtpaket aus
(A) einer Schicht enthaltend ein Mischoxid, Hydroxid, Oxohydrat oder Doppelhydroxid der allgemeinen Formel M¹ᵥM²_{w}Oₓ(OH)_{y}X_{z}, mit M¹ = Fe und M² = Mg^{II}, Ca^{II} Sr^{II}, Ba^{II}, Ti^{III/IV}, Zr^{IV}, Cr^{III}, Fe^{II/III}, CO^{II/III}, Ni", Cu^{II}, Ag^{I}, Zn^{II}, Al^{III}, Ga^{III}, Sn^{II/IV}, Sb^{III/IV}, Bi^{III}, X = Cl⁻, NO₃⁻, SO₄²⁻, CO₃²⁻ und v=1 -3;w=0-3;x=0-6,y=0-12undz=0-1 wobei v + w > 0 und x + y > 0 ist, und
v, w, x und y im Falle von Suboxiden auch nicht ganzzahlige Koeffizienten sein können, und
(B) einer Schicht aus SiO₂ und/oder Al₂O₃ bzw. deren Hydraten,
enthalten.

2. Effektpigmente nach Anspruch 1, **dadurch gekennzeichnet, dass** das beschichtete oder unbeschichtete Substrat ausgewählt ist aus der Gruppe Glasplättchen, synthetische oder natürliche Glimmerplättchen, SiOₓ-Plättchen (x ≤ 2,0), Al₂O₃-Plättchen, TiO₂-Plättchten, synthetische oder natürliche Eisenoxidplättchen, Metallplättchen, gegebenenfalls passiviert, Plättchen aus Aluminiumbronzen, Messingbronzen, Zinkbronzen, Titanbronzen, Graphitplättchen, Liquid Crystal Polymers (LCPs), holographische Pigmente, BiOCl-Plättchen, oder Gemische der genannten Plättchen.

3. Effektpigmente nach Anspruch 1 oder 2 **dadurch gekennzeichnet, dass** die Substrate mit ein, zwei, drei oder vier Metalloxiden und dem Schichtpaket (A)(B) belegt sind.

4. Effektpigmente nach einem oder mehreren der Ansprüche 1 bis 3, **dadurch gekennzeichnet, dass** die Substrate mit Metalloxiden aus der Gruppe TiO₂ in der Rutil- oder Anatas-Modifikation, Zirkonoxid, Zinnoxid, Zinkoxid, Siliziumdioxid belegt sind.

5. Effektpigmente nach einem oder mehreren der Ansprüche 1 bis 4, **dadurch gekennzeichnet, dass** die Schicht (A) aus Fe₂O₃, Fe₃O₄, FeOOH, FeTiO₃, Fe₂TiO₅ Fe(OH)₃/Al(OH)₃-Gemisch, Fe(OH)₃/Ca(OH)₂-Gemisch, Fe(OH)₃/Mg(OH)₂-Gemisch oder Fe(OH)₃/Zn(OH)₂-Gemisch besteht.

6. Effektpigmente nach einem oder mehreren der Ansprüche 1 bis 5, **dadurch gekennzeichnet, dass** die Schicht (A) eine Dicke von 2 - 350 nm hat.

7. Effektpigmente nach einem oder mehreren der Ansprüche 1 bis 6, **dadurch gekennzeichnet, dass** die Schicht (B) aus SiO₂ besteht.

8. Effektpigmente nach einem oder mehreren der Ansprüche 1 bis 7, **dadurch gekennzeichnet, dass** die Schicht (B) ein Gemisch aus SiO₂ und Al₂O₃ ist.

9. Effektpigmente nach einem oder mehreren der Ansprüche 1 bis 8, **dadurch gekennzeichnet, dass** die Schicht (B) mit Oxiden oder Hydroxiden aus der Gruppe V, Zr, Zn, Ce, Ti, B, Na, K, Mg, Ca und/oder Mn dotiert ist.

10. Effektpigmente nach einem oder mehreren der Ansprüche 1 bis 9, **dadurch gekennzeichnet, dass** die Schicht (B) eine Dicke von 2 - 200 nm hat.

11. Effektpigmente nach einem oder mehreren der Ansprüche 1 bis 10, **dadurch gekennzeichnet, dass** sie folgende Schichtfolgen aufweisen:
Substrat + (SiO₂ + Fe₂O₃ + SiO₂
Substrat + (SiO₂) + TiO₂ + Fe₂O₃ + SiO₂
Substrat + (SiO₂) + TiO₂ + SiO₂ + TiO₂ + Fe₂O₃ + SiO₂
Substrat + (SiO₂) + FeOOH + SiO₂
Substrat + (SiO₂) + TiO₂ + FeOOH + SiO₂
Substrat + (SiO₂) + Fe₂TiO₅ + SiO₂
Substrat + (SiO₂) + TiO₂ + Fe₂TiO₅ + SiO₂
Substrat + (SiO₂) + FeTiO₃ + SiO₂
Substrat + (SiO₂) + TiO₂ + FeTiO₃ + SiO₂
Substrat + (SiO₂) + Fe(OH)₃/Mg(OH)₂ + SiO₂
Substrat + (SiO₂) + TiO₂ + Fe(OH)₃/Mg(OH)₂ + SiO₂
Substrat + (SiO₂) + Fe(OH)₃/Ca(OH)₂-+ SiO₂
Substrat + (SiO₂) + TiO₂ + Fe(OH)₃/Ca(OH)₂+ SiO₂
Substrat + (SiO₂) + Fe₃O₄ + SiO₂
Substrat + (SiO₂) + TiO₂ + Fe₃O₄ + SiO₂
Substrat + (SiO₂) + Fe(OH)₃/Al(OH)₃ + SiO₂
Substrat + (SiO₂) + TiO₂ + Fe(OH)₃/Al(OH)₃ + SiO₂
Substrat + (SiO₂) + TiO₂ + FeCa₂(OH)₆Cl + SiO₂
Substrat + (SiO₂) + TiO₂ + FeCa₂(OH)₆NO₃ + SiO₂
Substrat + (SiO₂) + TiO₂ + FeMg₂(OH)₆CO₃ + SiO₂
Substrat + (SiO₂) + TiO₂ + FeZn₂(OH)₆CO₃ + SiO₂
Substrat + (SiO₂) + TiO₂ + CrO₃ + Fe₃O₄ + SiO₂
Substrat + (SiO₂) + Fe(OH)₃/Zn(OH)₂ + SiO₂
Substrat + (SiO₂) + Fe(OH)₃/Zn(OH)₂ + SiO₂/Al₂O₃
Substrat + (SiO₂) + Fe₂O₃ + SiO₂ + Fe₂O₃ + SiO₂/Al₂O₃
Substrat + (SiO₂) + Fe₂O₃ + SiO₂ + Fe₂O₃ + SiO₂
Substrat + (SiO₂) + Fe₃O₄ + SiO₂ + Fe₃O₄ + SiO₂/Al₂O₃
Substrat + (SiO₂) + Fe₃O₄ + SiO₂ + Fe₃O₄ + SiO₂
Substrat + (SiO₂) + Fe₂O₃ + SiO₂/Al₂O₃
Substrat + (SiO₂) + TiO₂ + Fe₂O₃ + SiO₂/Al₂O₃
Substrat + (SiO₂) + TiO₂ + SiO₂ + TiO₂ + Fe₂O₃ + SiO₂/Al₂O₃
Substrat + (SiO₂) + FeOOH + SiO₂/Al₂O₃
Substrat + (SiO₂) + TiO₂ + FeOOH + SiO₂/Al₂O₃
Substrat + (SiO₂) + Fe₂TiO₅ + SiO₂/Al₂O₃
Substrat + (SiO₂) + TiO₂ + Fe₂TiO₅ + SiO₂/Al₂O₃
Substrat + (SiO₂) + FeTiO₃ + SiO₂/Al₂O₃
Substrat + (SiO₂) + TiO₂ + FeTiO₃ + SiO₂/Al₂O₃
Substrat + (SiO₂) + Fe(OH)₃/Mg(OH)₂ + SiO₂/Al₂O₃
Substrat + (SiO₂) + TiO₂ + Fe(OH)₃/Mg(OH)₂ + SiO₂/Al₂O₃
Substrat + (SiO₂) + Fe(OH)₃/Ca(OH)₂-+ SiO₂/Al₂O₃
Substrat + (SiO₂) + TiO₂ + Fe(OH)₃/Ca(OH)₂+ SiO₂/Al₂O₃
Substrat + (SiO₂) + Fe₃O₄ + SiO₂/Al₂O₃
Substrat + (SiO₂) + TiO₂ + Fe₃O₄ + SiO₂/Al₂O₃
Substrat + (SiO₂) + Fe(OH)₃/Al(OH)₃ + SiO₂/Al₂O₃
Substrat + (SiO₂) + TiO₂ + Fe(OH)₃/Al(OH)₃ + SiO₂/Al₂O₃

12. Verfahren zur Herstellung der Pigmente nach einem oder mehreren der Ansprüche 1 bis 11, **dadurch gekennzeichnet, dass** die Beschichtung der plättchenförmigen Substrate nasschemisch, durch CVD- oder PVD-Verfahren erfolgt.

13. Verwendung der Effektpigmenten nach einem oder mehreren der Ansprüche 1 bis 11 in Farben, Lacken, Automobillacken, Pulverlacken, Druckfarben, Sicherheitsdruckfarben, Kunststoffen, keramischen Materialien, Gläsern, Papier, im Papierstrich, in Tonern für elektrophotographische Druckverfahren, im Saatgut, in Gewächshausfolien und Zeltplanen, als Absorber bei der Lasermarkierung von Papier und Kunststoffen, als Absorber beim Laserschweißen von Kunststoffen, kosmetischen Formulierungen, zur Herstellung von Pigmentanteigungen mit Wasser, organischen und/oder wässrigen Lösemitteln, zur Herstellung von Pigmentpräparationen und Trockenpräparaten.

14. Verwendung der Effektpigmente nach Anspruch 13 in Tagescremes, Foundations, Selbstbräunungscremes, Selbstbräunungssprays, Selbstbräunungslotionen.

15. Verwendung der Effektpigmente nach Anspruch 13 oder 14 in Kombination mit 1,3-Dihydroxyaceton und/oder Erythrulose.

16. Verwendung der Effektpigmente nach einem oder mehreren der Ansprüche 13 bis 15 als "skin-corrector" in kosmetischen Formulierungen.
